# EUROPEAN PATENT SPECIFICATION

(11) **EP 3 498 996 B1**
(45) Date of publication and mention of the grant of the patent: **13.04.2022**
(21) Application number: 17839183.5
(22) Date of filing: 20.07.2017
(51) Int. Cl.: F01N 3/28, B62M 7/02, F01N 3/20, F01N 3/24, F01N 13/18, F01N 13/00

(54) **EXHAUST STRUCTURE FOR SADDLED VEHICLE**
AUSPUFFSTRUKTUR FÜR SATTELFAHRZEUG
STRUCTURE D'ÉCHAPPEMENT POUR VÉHICULE À SELLE

(30) Priority: 10.08.2016 JP 2016157531
(43) Date of publication of application: 19.06.2019
(73) Proprietor: Honda Motor Co., Ltd., Tokyo 107-8556 (JP)
(72) Inventor: KITAMOTO, Hiroshi, Wako-shi Saitama 351-0193 (JP); KAWANO, Sunao, Wako-shi Saitama 351-0193 (JP); YAMADA, Tsunaki, Wako-shi Saitama 351-0193 (JP); MAKI, Satoru, Wako-shi Saitama 351-0193 (JP); OMORI, Jumpei, Wako-shi Saitama 351-0193 (JP)
(74) Representative: Dehns
(86) International application number: PCT/JP2017/026357
(87) International publication number: WO 2018/030110

(56) References cited:
- EP-A1- 3 165 737
- WO-A1-2011/096291
- WO-A1-2016/002952
- WO-A1-2016/002960
- CN-A- 109 563 762
- JP-A- H0 447 114
- JP-A- H11 311 121
- JP-A- 2002 201 934
- JP-A- 2016 142 154
- US-A1- 2015 166 139

## Description

### Technical Field

The present invention relates to an exhaust structure for a saddled vehicle.

### Background Field

There has been conventionally known a saddled vehicle including a vehicle body frame, a unit swing engine swingably supported on the vehicle body frame via a link member, an exhaust pipe connected to the unit swing engine, and a catalytic device arranged in an intermediate portion of the exhaust pipe (see Patent Literature 1, for example). In the unit swing engine as disclosed in Patent Literature 1, the exhaust pipe and the catalytic device swing together with the unit swing engine.

WO 2016/002952 A1 discloses a saddle vehicle.

### Citation List

### Patent Literature

Patent Literature 1: Japanese Patent Laid-Open No. 2013-36422

### Summary of Invention

### Technical Problem

Meanwhile, in the above conventional saddled vehicle, the presence of the link member may interfere with the arrangement of the catalytic device, and therefore it is desired to enhance the degree of freedom of the arrangement of the catalytic device, and to arrange the catalytic device in a compact manner so that the catalytic device configured to swing together with the unit swing engine does not contact the other parts around the catalytic device.

The present invention has been made in view of the above-mentioned circumstances, and it is an object of the present invention to enhance the degree of freedom of the arrangement of a catalytic device and arrange the catalytic device in a compact manner in an exhaust structure for a saddled vehicle in which a unit swing engine is provided.

### Solution to Problem

The present invention provides an exhaust structure for a saddled vehicle, the exhaust structure including: a vehicle body frame; a unit swing engine having a cylinder arranged generally horizontally, and a crankcase, the unit swing engine being swingably supported on the vehicle body frame via a link member; an exhaust pipe connected to the unit swing engine; and a catalytic device arranged in an intermediate portion of the exhaust pipe; wherein the exhaust pipe includes an upstream exhaust pipe portion which is drawn out from a cylinder head of the cylinder, the catalytic device, which is provided downstream of the upstream exhaust pipe portion in the flow of exhaust gas, and a downstream exhaust pipe portion provided downstream of the catalytic device; the exhaust structure for a saddled vehicle being characterised in that: the link member is arranged above the crankcase; at least part of the catalytic device is arranged below the cylinder and is positioned in a region between a virtual line L1 and a virtual line L2 in side view, the virtual line L1 connecting a connecting portion for connecting the link member to the vehicle body frame and a front end of the crankcase, the virtual line L2 connecting the connecting portion and an exhaust pipe connecting portion, of the cylinder head, to which an upstream end of the upstream exhaust pipe portion is connected; the catalytic device is arranged so that a lengthwise direction thereof is directed in the vehicle width direction, so that an axis of the catalytic device is directed in a direction perpendicular to a center line in the vehicle width direction, and a center in the vehicle width direction of the catalytic device is offset toward one side in the vehicle width direction with respect to the center line in the vehicle width direction of the vehicle.

According to a configuration of the present invention, the link member is arranged above the unit swing engine, and, in side view, at least part of the catalytic device is arranged below the cylinder and is positioned in a region between a virtual line connecting a connecting portion for connecting the link member to the vehicle body frame and the front end of the crankcase and a virtual line connecting the connecting portion and an exhaust pipe connecting portion of the unit swing engine to which an end of the exhaust pipe is connected. Thus, the link member is arranged above the unit swing engine, whereby a space below the unit swing engine can be secured, and the catalytic device can be arranged using this space. Furthermore, the catalytic device is positioned in a region between a virtual line connecting a connecting portion for connecting the link member to the vehicle body frame and the front end of the crankcase and a virtual line connecting the connecting portion and an exhaust pipe connecting portion, of the unit swing engine, to which an end of the exhaust pipe is connected, whereby the catalytic device can be arranged in a compact manner so that the catalytic device does not contact the other parts around the catalytic device.

In the exhaust structure for a saddled vehicle of the present invention, a configuration may be adopted in which the vehicle body frame includes outward inclined portions, the outward inclined portions inclining outward so that a distance in a vehicle width direction therebetween is increased in a rearward direction in bottom view, and the catalytic device is arranged more inside in the vehicle width direction than outer end portions in the vehicle width direction of the outward inclined portions.

According to the configuration of the present invention, the catalytic device is arranged more inside in the vehicle width direction than outer end portions in the vehicle width direction of the outward inclined portions of the vehicle body frame, whereby the catalytic device can be protected by the outside inclined portions from the outside in the vehicle width direction. The heavy catalytic device can be arranged on a center side in the vehicle width direction, whereby the vehicle mass can be concentrated in the vehicle width direction.

In the exhaust structure for a saddled vehicle of the present invention, a configuration may be adopted in which a center stand for supporting the saddled vehicle in an upright state is provided, and the catalytic device is arranged above a lower end of the center stand.

According to the configuration of the present invention, the catalytic device is arranged above the lower end of the center stand, whereby the catalytic device can be arranged below the cylinder and above the lower end of the center stand, and can be arranged high relative to a road surface.

Furthermore, in the exhaust structure for a saddled vehicle of the present invention, a configuration may be adopted in which a side stand is attached to the vehicle body frame, and in a state in which the side stand is stored, the side stand overlaps with at least part of the catalytic device in side view.

According to the configuration of the present invention, the side stand overlaps with at least part of the catalytic device in side view, whereby the catalytic device can be protected by the side stand from the side, and the side stand can prevent the catalytic device from being visible, thereby improve the appearance.

In the exhaust structure for a saddled vehicle of the present invention, a configuration may be adopted in which an air-cooling shroud is attached to the unit swing engine, the shroud is inclined upward toward the catalytic device from a position behind the catalytic device, and a clearance portion is provided in a position that faces the catalytic device.

According to the configuration of the present invention, the air-cooling shroud is inclined upward toward the catalytic device from a position behind the catalytic device, and the clearance portion is provided at a position that faces the catalytic device. Thus, a distance between the catalytic device and the shroud can be secured by the clearance portion of the shroud, whereby the thermal effect of the catalytic device on the shroud can be reduced.

In the exhaust structure for a saddled vehicle of the present invention, a configuration may be adopted in which a cooling fan is attached to a crankshaft being housed in the crankcase, and the shroud includes an air guide opening for guiding cooling air of the cooling fan to the catalytic device.

According to the configuration of the present invention, the shroud includes an air guide opening for guiding cooling air of the cooling fan to the catalytic device, whereby the cooling air of the cooling fan can be guided to the catalytic device from the air guide opening, thereby cooling the catalytic device.

In the exhaust structure for a saddled vehicle of the present invention, a configuration may be adopted in which an oxygen sensor is attached to the exhaust pipe, the cooling fan is attached to the crankshaft being housed in the crankcase, a fan cover covering the cooling fan being provided, and the fan cover includes a sensor cover portion covering the oxygen sensor from a side.

According to the configuration of the present invention, the fan cover includes the sensor cover portion covering the oxygen sensor from the side, whereby the oxygen sensor can be protected with a simple structure using the fan cover.

In the exhaust structure for a saddled vehicle of the present invention, a configuration may be adopted in which a seat for a rider is arranged above the unit swing engine, a center lower cover is arranged below a front end of the seat, and the center lower cover includes an opening being positioned below an uppermost end of the unit swing engine so that the opening is inclined downward to a rear to be directed to the catalytic device.

According to the configuration of the present invention, the center lower cover being positioned below the front end of the seat includes an opening being positioned below the uppermost end of the unit swing engine, and the opening is inclined downward to the rear to be directed to the catalytic device. Thus, the traveling air can be introduced from the opening of the center lower cover to the catalytic device, whereby the traveling air can be used to cool the catalytic device.

In the exhaust structure for a saddled vehicle of the present invention, a configuration may be adopted in which a step floor is arranged in front of the unit swing engine, a leg shield is arranged in front of the step floor, and the leg shield includes a front opening for introducing air to the catalytic device.

According to the configuration of the present invention, the leg shield includes the front opening for introducing air to the catalytic device, whereby the traveling air can be introduced from the front opening of the leg shield to the catalytic device, and the traveling air can be used to effectively cool the catalytic device.

In the exhaust structure for a saddled vehicle of the present invention, a configuration may be adopted in which the catalytic device is arranged so that a lengthwise direction thereof is directed in the vehicle width direction, the vehicle body frame includes a pair of left and right frames, and is provided with a cross member connecting the frames in the vehicle width direction, and the cross member overlaps with at least part of the catalytic device in front view.

According to the configuration of the present invention, the cross member connecting the frames in the vehicle width direction overlaps with at least part of the catalytic device. Therefore, the cross member can protect the catalytic device from the front side.

Furthermore, in the exhaust structure for a saddled vehicle of the present invention, a configuration is adopted in which the catalytic device is arranged so that a lengthwise direction thereof is directed in the vehicle width direction, and a center in the vehicle width direction of the catalytic device is offset toward one side in the vehicle width direction with respect to a center in the vehicle width direction of the vehicle.

According to the configuration of the present invention, the center in the vehicle width direction of the catalytic device arranged so that the lengthwise direction of the catalytic device is directed in the vehicle width direction is offset toward one side in the vehicle width direction with respect to the center in the vehicle width direction of the vehicle. Therefore, the pipe length of the exhaust pipe being positioned upstream of the catalytic device can be secured long.

In the exhaust structure for a saddled vehicle of the present invention, a configuration may be adopted in which the catalytic device includes a first catalytic device, and a second catalytic device being positioned downstream of the first catalytic device, an oxygen sensor is arranged in a middle exhaust pipe connecting between the first catalytic device and the second catalytic device in the exhaust pipe, and the oxygen sensor is arranged in a position where the oxygen sensor overlaps with the middle exhaust pipe in side view.

According to the configuration of the present invention, the oxygen sensor is arranged in the middle exhaust pipe connecting between the first catalytic device and the second catalytic device, and the oxygen sensor is arranged at a position where the oxygen sensor overlaps with the middle exhaust pipe in side view. Thus, the oxygen sensor can detect the oxygen in the middle exhaust pipe being positioned downstream of the first catalytic device, the middle exhaust pipe can cover and protect the oxygen sensor, and the middle exhaust pipe prevents the oxygen sensor from being visible, whereby the appearance can be improved.

In the exhaust structure for a saddled vehicle of the present invention, a configuration may be adopted in which a muffler to which a rear end of the exhaust pipe is connected is provided on one side in the vehicle width direction, the exhaust pipe connecting portion is provided in a lower surface of the cylinder, the catalytic device is arranged behind the exhaust pipe connecting portion and in front of the front end of the crankcase so that a lengthwise direction of the catalytic device is directed in the vehicle width direction, and the exhaust pipe includes the upstream exhaust pipe portion extending downward and subsequently toward the other side in the vehicle width direction in front of the catalytic device from the exhaust pipe connecting portion, and being subsequently folded back to the one side in the vehicle width direction to be connected to the other side end in the vehicle width direction of the catalytic device, and the downstream exhaust pipe portion extending rearward from the one side end in the vehicle width direction of the catalytic device to be connected to the muffler.

According to the configuration of the present invention, the muffler is provided on the one side in the vehicle width direction, and the exhaust pipe includes the upstream exhaust pipe portion extending downward and subsequently toward the other side in the vehicle width direction in front of the catalytic device from the exhaust pipe connecting portion, and being subsequently folded back to the one side in the vehicle width direction to be connected to the other side end in the vehicle width direction of the catalytic device, and the downstream exhaust pipe portion extending rearward from the one side end in the vehicle width direction of the catalytic device to be connected to the muffler. Thus, the upstream exhaust pipe portion extending from the lower surface of the cylinder extends to a side opposite to the muffler side, and is subsequently folded back to be connected to the other end of the catalytic device, whereby the length of the upstream exhaust pipe portion can be maintained large. Furthermore, a space between the upstream exhaust pipe portion and the front end of the crankcase can be used to arrange the catalytic device in a compact manner.

### Advantageous Effects of Invention

In the exhaust structure for a saddled vehicle according to the present invention, a space below the unit swing engine can be used to arrange the catalytic device, and the catalytic device can be arranged in a compact manner so that the catalytic device does not contact the other parts around the catalytic device.

Also, the catalytic device can be protected by outward inclined portions from the outside in the vehicle width direction, and the vehicle mass can be concentrated in the vehicle width direction.

The catalytic device can be arranged high relative to the road surface.

Furthermore, a side stand can protect the catalytic device from the side, whereby the appearance can be improved.

The thermal effect of the catalytic device on the shroud can be reduced by a clearance portion.

The catalytic device can be cooled by the cooling air of the cooling fan.

The oxygen sensor can be protected with a simple structure using the fan cover.

The traveling air entering from the opening in the center lower cover can be used to cool the catalytic device.

The traveling air entering from the front opening of the leg shield can be used to cool the catalytic device.

The cross member can protect the catalytic device from the front.

The pipe length of the exhaust pipe being positioned upstream of the catalytic device can be secured long.

The middle exhaust pipe can prevent the oxygen sensor from being visible, whereby the appearance can be improved.

The upstream exhaust pipe portion extending from the lower surface of the cylinder extends to a side opposite to the muffler side, and is subsequently folded back to be connected to the other end of the catalytic device, whereby the length of the upstream exhaust pipe portion can be maintained large. Furthermore, a space between the upstream exhaust pipe portion and the front end of the crankcase can be used to arrange the catalytic device in a compact manner.

### Brief Description of Drawings

[Figure 1] Figure 1 is a left side view of a saddled vehicle according to an embodiment of the present invention.
[Figure 2] Figure 2 is a right side view of a main portion of the saddled vehicle.
[Figure 3] Figure 3 is a plan view of the saddled vehicle in a state of Figure 2 as viewed from below.
[Figure 4] Figure 4 is a right side view depicting a structure of a portion around a unit swing engine.
[Figure 5] Figure 5 is a plan view of the portion around the unit swing engine as viewed from below.
[Figure 6] Figure 6 is a perspective view of the portion around the unit swing engine as viewed from the right lower side.
[Figure 7] Figure 7 is a left side view of portions around a side stand and a catalytic device.
[Figure 8] Figure 8 is a cross-sectional view taken along a line VIII-VIII in Figure 1.
[Figure 9] Figure 9 is a cross-sectional view taken along a line IX-IX in Figure 1.
[Figure 10] Figure 10 is a right side view depicting a structure of a portion around a unit swing engine in a second embodiment.
[Figure 11] Figure 11 is a plan view of the portion around the unit swing engine as viewed from below.
[Figure 12] Figure 12 is a right side view of a muffler.
[Figure 13] Figure 13 is a plan view of a portion around a unit swing engine in a third example, as viewed from below.
[Figure 14] Figure 14 is a right side view depicting a structure of a portion around a unit swing engine in a fourth embodiment.
[Figure 15] Figure 15 is a front view of a portion around a second oxygen sensor as viewed from the front side.
[Figure 16] Figure 16 is a left side view of portions around a center stand and a catalytic device in a fifth embodiment.

### Description of Embodiments

Hereinafter, one embodiment of the present invention will be described with reference to the drawings. In the description that follows, forward, rearward, leftward, rightward, upward and downward directions are relative to the vehicle body unless otherwise specified. In the drawings, an arrow FR represents a forward direction of the vehicle body, an arrow UP represents an upward direction of the vehicle body, and an arrow LH represents a leftward direction of the vehicle body.

### [First Embodiment]

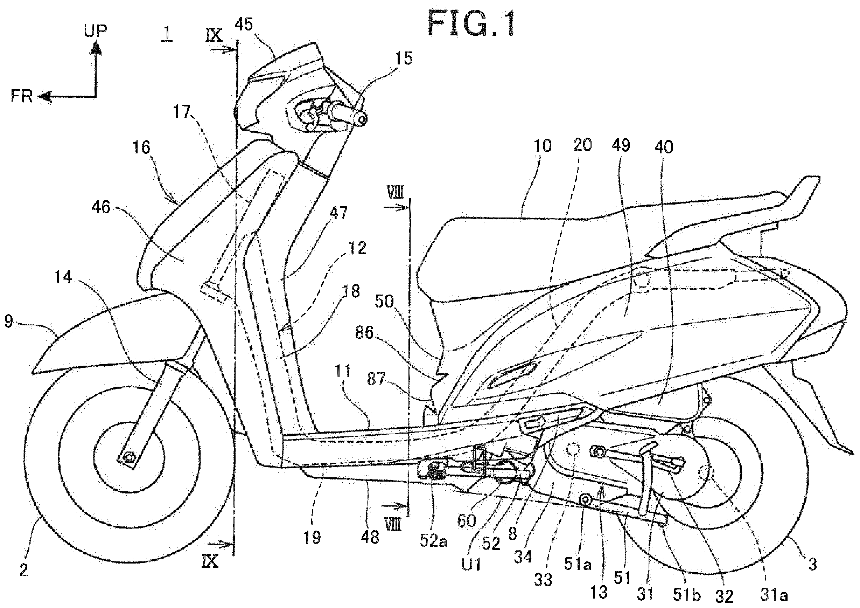

Figure 1 is a left side view of a saddled vehicle according to an embodiment of the present invention. It is noted that Figure 1 depicts only left side parts of parts provided as left-right pairs.

A saddled vehicle 1 is a scooter motorcycle having a low-level step floor 11 for a rider seated on a seat 10 to put his/her feet on. The saddled vehicle 1 has a front wheel 2 in front of a vehicle body frame 12, and a rear wheel 3 which is a driving wheel is axially supported by a unit swing engine 13 arranged in a rear portion of the vehicle.

The saddled vehicle 1 includes a front fork 14 axially supported by a front end portion of the vehicle body frame 12, and the front wheel 2 is axially supported by lower end portions of the front fork 14. A handlebar 15 configured to be manipulated by the rider is mounted on an upper end of the front fork 14.

The saddled vehicle 1 includes a vehicle body cover 16 covering the vehicle body such as the vehicle body frame 12.

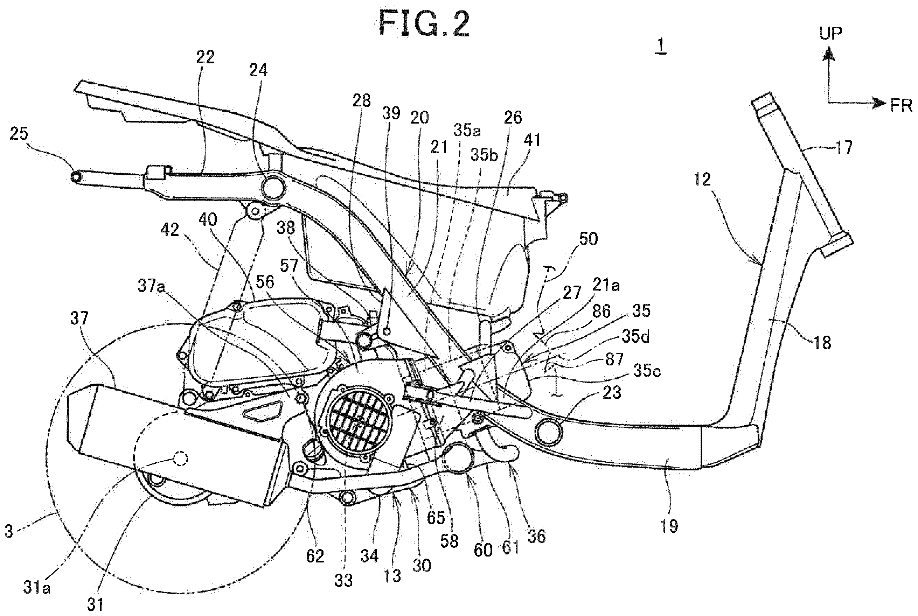

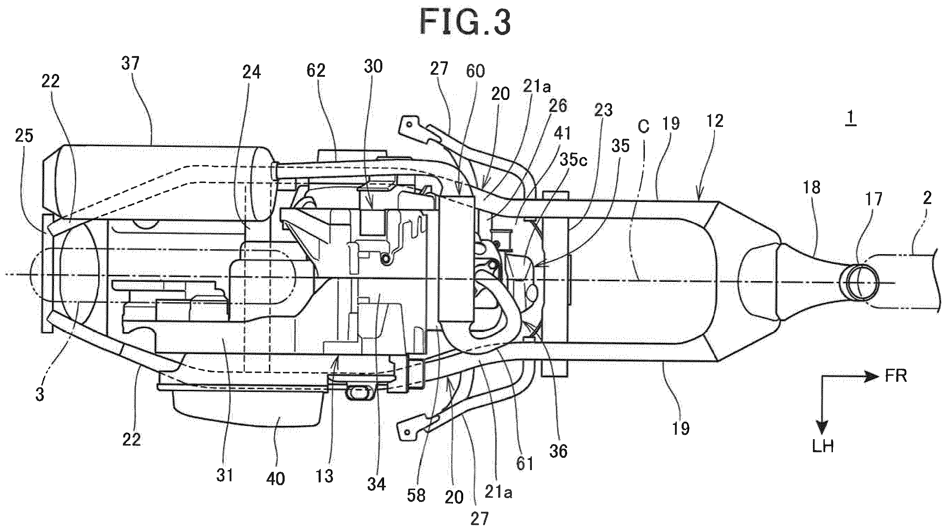

Figure 2 is a right side view of a main portion of the saddled vehicle 1. Figure 2 depicts the saddled vehicle 1 in a state in which the vehicle body cover 16, the seat 10, the front fork 14, and the other parts are detached. Figure 3 is a plan view of the saddled vehicle 1 in the state of Figure 2 as viewed from below.

Referring to Figure 1 to Figure 3, the vehicle body frame 12 includes a head pipe 17 provided at a front end of the vehicle body frame 12, a down frame 18 extending downward toward the rear from the head pipe 17, a pair of left and right lower frames 19, 19 (frames) extending generally in the horizontal direction from a lower end of the down frame 18, and a pair of left and right seat frames 20, 20 extending upward toward the rear from the respective rear ends of the lower frames 19, 19.

The lower frames 19, 19 and the seat frames 20, 20 are each formed into a pipe shape extending in the front-rear direction.

The lower frames 19, 19 are provided generally parallel to a center line C in the vehicle width direction of the saddled vehicle 1, the center line C connecting between a center in the vehicle width direction (a left-right direction) of the front wheel 2 and a center in the vehicle width direction of the rear wheel 3.

Each seat frame 20 includes an inclined portion 21 extending upward toward the rear from the corresponding lower frame 19, and a horizontal portion 22 extending generally horizontally from the rear end of the inclined portion 21 to the rear end of the vehicle body frame 12.

The front end portions of the inclined portions 21, 21 are provided with outward inclined portions 21a, 21a, respectively, the outward inclined portions 21a, 21a inclining outward so that a distance in the vehicle width direction therebetween is increased in the rearward direction.

The vehicle body frame 12 includes a cross member 23 connecting the rear ends of the lower frames 19, 19 in the vehicle width direction, an upper cross member 24 connecting the rear ends of the inclined portions 21, 21 in the vehicle width direction, and a rear cross member 25 connecting the rear ends of the horizontal portions 22, 22 in the vehicle width direction.

The vehicle body frame 12 includes a box support frame 26 connecting the outward inclined portions 21a, 21a of the inclined portions 21, 21 in the vehicle width direction, and a pair of left and right support frames 27, 27 extending outward in the vehicle width direction from the respective outside surfaces of the outward inclined portions 21a, 21a.

Furthermore, the vehicle body frame 12 includes a pair of left and right engine brackets 28, 28 protruding in the rearward direction from the respective rear surfaces of the inclined portions 21, 21 of the seat frames 20, 20.

The unit swing engine 13 is a unit swing power unit in which an engine 30 which is an internal combustion engine and an arm portion 31 supporting the rear wheel 3 are integrated. A belt type continuously variable transmission (not depicted) for transmitting the output of the engine 30 to the rear wheel 3 is housed inside the arm portion 31 formed into a hollow box shape. A kick pedal 32 for manually starting the engine 30 is provided on the outside surface of the arm portion 31.

The engine 30 includes a crankcase 34 for housing a crankshaft 33 extending in the vehicle width direction, and a cylinder 35 extending generally horizontally in the forward direction from the front surface portion of the crankcase 34.

The cylinder 35 includes a cylinder block 35a, a cylinder head 35b, and a head cover 35c in this order from the crankcase 34 side. An axis 35d of the cylinder 35 or an axis of a cylinder bore of the cylinder block 35a in which a piston reciprocates extends generally horizontally in an attitude in which the axis 35d is inclined slightly upward to the front.

The exhaust pipe 36 of the engine 30 is drawn out from the cylinder head 35b and extends rearward, and the rear end which is a downstream end of the exhaust pipe 36 is connected to a muffler 37 which is a muffler device. The muffler 37 is arranged on the right side (one side) of the rear wheel 3. The muffler 37 is fixed to a right rear portion of the crankcase 34 via a front stay 37a.

The arm portion 31 extends rearward from a left rear portion of the crankcase 34, and is positioned on the left side (the other side) of the rear wheel 3. The rear wheel 3 is axially supported by a rear wheel axle 31a at a rear end portion of the arm portion 31, and is supported in a cantilever manner by the arm portion 31.

That is, the muffler 37 is arranged on one side (right side) in the vehicle width direction with respect to the rear wheel 3 which is positioned on the center line C in the vehicle width direction (Figure 3), and the arm portion 31 is arranged on the other side (left side) in the vehicle width direction with respect to the rear wheel 3.

The unit swing engine 13 is swingably supported on the vehicle body frame 12 via a link member 38 arranged above the crankcase 34.

The link member 38 is connected to the vehicle body frame 12 via a pivot shaft 39 (connecting part) connecting, in the vehicle width direction, the engine brackets 28, 28 of the respective seat frames 20, 20. The unit swing engine 13 is configured to swing about the pivot shaft 39.

A rear suspension 42 configured to reduce the swinging movement of the unit swing engine 13 extends between the arm portion 31 and the seat frame 20.

An intake system of the engine 30 includes an air cleaner box 40, and a throttle body (not depicted) connected downstream of the air cleaner box 40.

The air cleaner box 40 is supported by the arm portion 31, and is positioned above the arm portion 31. The above-described throttle body is arranged in front of the air cleaner box 40 and above the unit swing engine 13, and the downstream end of the throttle body is connected to an intake port in a top surface of the cylinder head 35b.

A storage box 41 capable of storing articles such as a helmet is provided above the engine 30 and between the left and right seat frames 20, 20. An opening in the upper surface of the storage box 41 is openably and closably covered by the seat 10. A front portion of the storage box 41 is supported on the box support frame 26 extending upward from the outward inclined portions 21a, 21a.

As depicted in Figure 1, the vehicle body cover 16 includes an upper cover 45 covering a portion around the handlebar 15, a front cover 46 covering the head pipe 17 and the down frame 18 from the front and sides, and a leg shield 47 joined to the front cover 46 and covering the head pipe 17 and the down frame 18 from the rear.

The vehicle body cover 16 includes an under cover 48 covering the lower frames 19, 19 from below, the step floor 11 covering the lower frames 19, 19 from above, a pair of left and right rear side covers 49 provided below the seat 10 and covering the seat frames 20, 20 and the storage box 41 from sides, and a center lower cover 50 provided below the seat 10 and covering the storage box 41 and the cylinder 35 from the front.

The saddled vehicle 1 includes a front fender 9 covering the front wheel 2 from above.

A center stand 51 for parking the saddled vehicle 1 in an upright state is attached to a lower surface portion of the crankcase 34. The center stand 51 is supported on the crankcase 34 via a center stand turning shaft 51a, and the center stand 51 is configured to be turned about the center stand turning shaft 51a so that the center stand 51 is in the stored state or in the parking state.

A side stand 52 for parking the saddled vehicle 1 in an inclined state in the vehicle width direction is attached to a rear portion of the lower frame 19 on the left side (the other side in the vehicle width direction), and is positioned in front of the cylinder 35. The side stand 52 is supported via the side stand turning shaft 52a provided in front of the cylinder 35 and to the lower frame 19, and the side stand 52 is configured to be turned about the side stand turning shaft 52a so that the side stand 52 is in the stored state or in the parking state.

Next, a structure of a portion around the unit swing engine 13 will be described in detail.

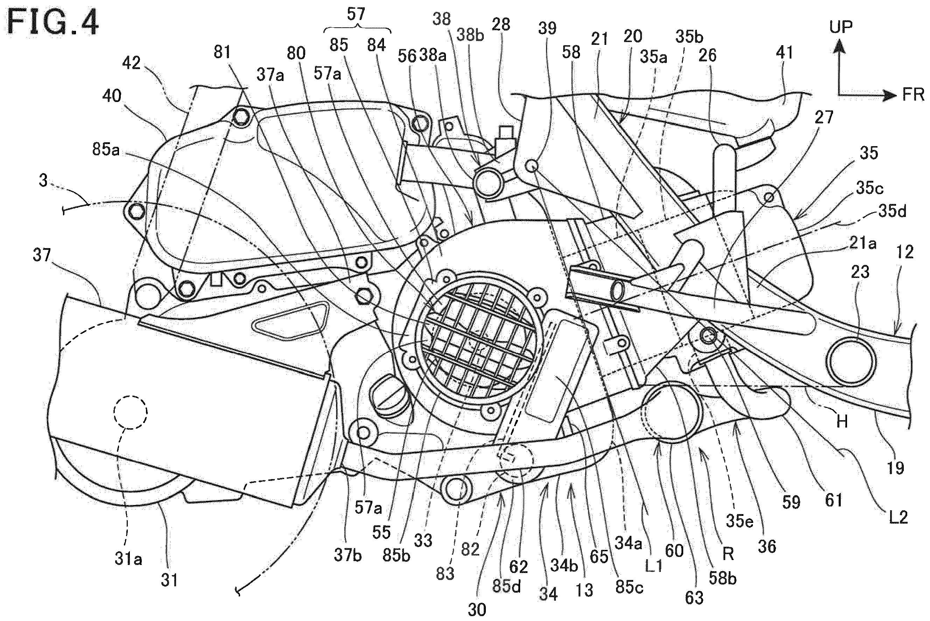

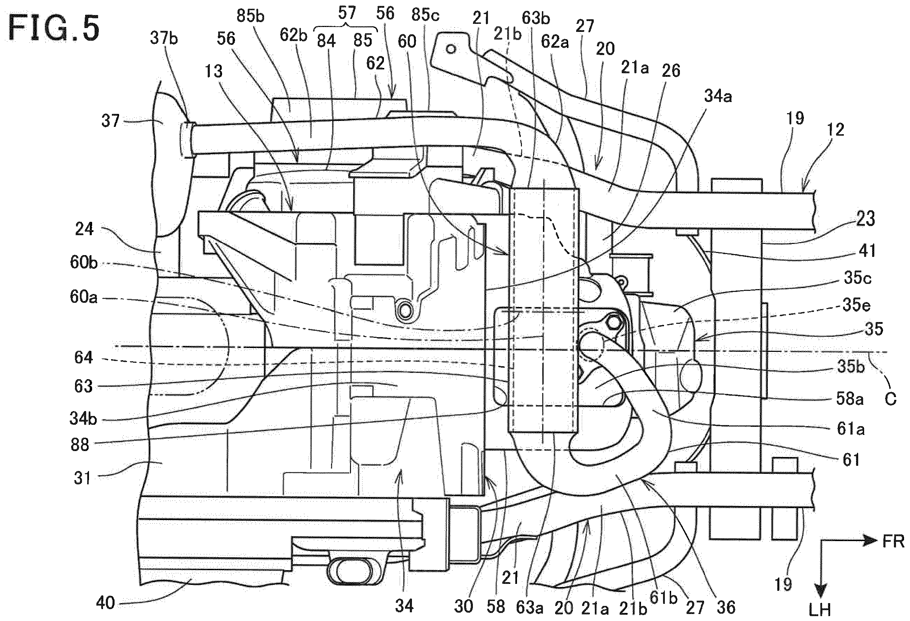

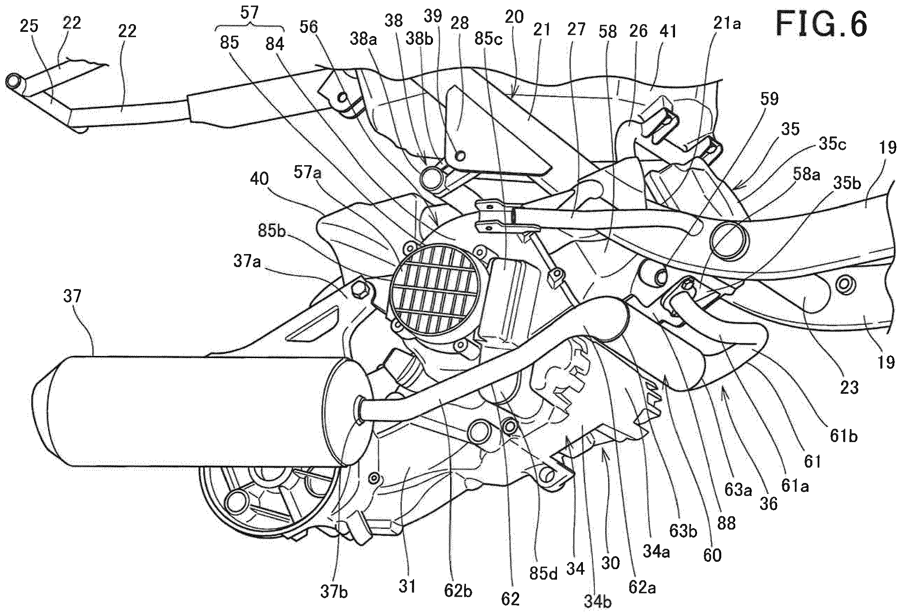

Figure 4 is a right side view depicting the structure of the portion around the unit swing engine 13. Figure 5 is a plan view of the portion around the unit swing engine 13 as viewed from below. Figure 6 is a perspective view of the portion around the unit swing engine 13 as viewed from the right lower side. It is noted that the side stand 52, the center stand 51 and the like are not depicted in Figure 4 to Figure 6.

Referring to Figure 4 to Figure 6, the unit swing engine 13 is arranged below the storage box 41 and behind the inclined portions 21, 21 of the seat frames 20, 20, and is supported in such a manner as to be suspended from the seat frames 20, 20 via the link member 38.

The link member 38 includes a bar-shaped link stay portion 38a fixed to the upper surface of the crankcase 34 and extending in the vehicle width direction, and a pair of connecting pieces 38b, 38b extending forward from both end portions in the vehicle width direction of the link stay portion 38a extending forward toward the engine brackets 28, 28. The front end portions of the respective connecting pieces 38b, 38b of the link member 38 are axially supported by the pivot shaft 39 so that the unit swing engine 13 is connected to the vehicle body frame 12.

The cylinder 35 extends forward from the crankcase 34, and is positioned below the box support frame 26 and between the outward inclined portions 21a, 21a of the seat frames 20, 20. More specifically, the cylinder head 35b is positioned between the outward inclined portions 21a, 21a, and the head cover 35c extends more forward than the outward inclined portions 21a, 21a. The head cover 35c is positioned behind the cross member 23.

The unit swing engine 13 includes a cooling fan 55 (Figure 4) on a side opposite to the arm portion 31 in the crankcase 34 or on one side in the vehicle width direction of the crankcase 34. The unit swing engine 13 is a forcedly-air-cooled engine configured to send air by rotation of the cooling fan 55 to cool the engine 30.

The cooling fan 55 is fixed to a shaft end portion of the crankshaft 33, the shaft end portion protruding to one side in the vehicle width direction from the crankcase 34, and is configured to rotate integrally with the crankshaft 33 during an operation of the engine 30 to send cooling air for cooling the engine 30.

The unit swing engine 13 includes a shroud 56 covering the engine 30 from the outside to introduce the cooling air of the cooling fan 55 into the engine 30. The shroud 56 includes a fan cover 57 covering one side surface of the crankcase 34 and a cylinder cover 58 covering the cylinder 35.

The fan cover 57 is attached to the one side surface of the crankcase 34 to cover the cooling fan 55. The fan cover 57 has an air intake port 57a in the outside surface thereof, the air intake port 57a communicating with the outside of the fan cover 57.

The cylinder cover 58 is provided so as to surround the cylinder 35 from around the axis 35d, and covers the entire circumference of the cylinder 35. The rear end of the cylinder cover 58 is connected to the front end of the fan cover 57, so that the inside of the fan cover 57 communicates with the inside of the cylinder cover 58. The front end of the cylinder cover 58 is connected to the rear end portion of the head cover 35c, so that the cylinder cover 58 covers the cylinder block 35a and the cylinder head 35b.

The cylinder cover 58 includes an exhaust pipe through hole 58a in the lower surface portion covering the lower surface of the cylinder head 35b, the exhaust pipe through hole 58a opening downward.

A front end 34a of the crankcase 34 is positioned on the rear lower side of the cylinder 35. More specifically, the front end 34a is positioned below the rear end portion of the cylinder block 35a. The front end 34a is positioned below a lower edge of the fan cover 57.

An oil pan part 34b for storing oil for lubricating an inner portion of the engine 30 is provided in the lower portion of the crankcase 34, the oil pan part 34b bulges downward from the lower edge of the fan cover 57. The front end 34a is a front end of the oil pan part 34b.

The unit swing engine 13 includes an opening and closing mechanism 80 for opening and closing the air intake port 57a of the fan cover 57. The opening and closing mechanism 80 includes a movable louver 81 configured to openably cover the air intake port 57a, an actuator 82 which is a driving source of the movable louver 81, and a link mechanism 83 connecting the actuator 82 and the movable louver 81 and configured to transmit the driving force of the actuator 82 to the movable louver 81.

The movable louver 81 is comprised of a plurality of blade members arranged generally in parallel to one another, and is configured to cover the air intake port 57a from the inside. When each blade member is turned, the air intake port 57a is opened and closed.

The actuator 82 is a temperature sensing actuator, and a drive unit of the actuator 82 connected to the link mechanism 83 is expanded and contracted by heat of the engine 30. The actuator 82 is arranged in the vicinity of the oil pan part 34b to be capable of easily detecting the heat of the engine 30, and is positioned on one side surface of the lower portion of the crankcase 34.

The link mechanism 83 is arranged on one side of the crankcase 34 and in front of the cooling fan 55 to extend in the up-down direction, and is configured to connect the movable louver 81 and the actuator 82.

For example, the opening and closing mechanism 80 is configured to close the air intake port 57a to promote the warming-up of the engine 30 when the engine 30 is at a predetermined temperature or below, and to open the air intake port 57a to promote the air cooling of the engine 30 in a state in which the engine 30 reaches high temperature.

The above-described fan cover 57 includes a cover main body portion 84 attached on the one side surface of the crankcase 34 and covering the cooling fan 55 from around the cooling fan 55, and a louver cover 85 covering the movable louver 81 and the cooling fan 55 from the outside.

The louver cover 85 includes a plate-shaped base portion 85a attached to the cover main body portion 84, a cylindrical portion 85b extending outward in the vehicle width direction from the base portion 85a, a link cover portion 85c covering the link mechanism 83 from the outside, and an actuator cover portion 85d covering the actuator 82 from the outside.

The air intake port 57a is an opening provided at an outer end in the vehicle width direction of the cylindrical portion 85b. The opening is provided with a lattice-shaped guard member.

The exhaust pipe 36 includes a catalytic device 60 for cleaning exhaust gas in an intermediate portion of its exhaust passage. The exhaust pipe 36 including the catalytic device 60 is arranged using a space below the cylinder 35 and the crankcase 34. Since the exhaust pipe 36 including the catalytic device 60, and the muffler 37 are fixed to the unit swing engine 13, they swing together with the unit swing engine 13 about the pivot shaft 39.

The exhaust pipe 36 includes an upstream exhaust pipe portion 61 which is drawn out from the cylinder head 35b, the catalytic device 60 which is provided downstream of the upstream exhaust pipe portion 61 in the flow of exhaust gas, and a downstream exhaust pipe portion 62 provided downstream of the catalytic device 60.

The cylinder head 35b includes an exhaust pipe connecting portion 35e in a lower surface of the cylinder head 35b, so that an upstream end of the exhaust pipe 36 is connected to the exhaust pipe connecting portion 35e. The exhaust pipe connecting portion 35e is an exhaust port of the cylinder head 35b, and is formed in a cylindrical shape. The upstream end of the upstream exhaust pipe portion 61 is connected to the exhaust pipe connecting portion 35e through the exhaust pipe through hole 58a. A first oxygen sensor 59 for detecting oxygen in the exhaust gas passing through the exhaust port is provided on one side surface of the exhaust pipe connecting portion 35e.

The catalytic device 60 includes an outer cylinder 63 formed in a cylindrical shape that is oblong in the vehicle width direction, and a cylindrical catalyst carrier 64 which is housed inside the outer cylinder 63. The catalyst carrier 64 has a honeycomb porous structure having a large number of pores and extending along an axial direction of the catalyst carrier 64. The catalyst carrier 64 carries thereon a catalyst for decomposing exhaust gas components comprising platinum, rhodium, and palladium, for example.

The catalytic device 60 is arranged in a space R which is positioned in front of the front end 34a of the crankcase 34 and below the cylinder 35. The catalytic device 60 is arranged generally horizontally in the space R, so that the axis 60a of the catalytic device 60 is directed in the vehicle width direction or the axis 60a is directed in a direction perpendicular to the center line C in the vehicle width direction in bottom view.

More specifically, the catalytic device 60 is arranged in front of the front end 34a of the crankcase 34 and behind the exhaust pipe connecting portion 35e of the cylinder head 35b. Also, the catalytic device 60 is positioned above the lower surface of the front end portion of the oil pan part 34b and below the lower surfaces of the cylinder block 35a and the cylinder head 35b. Furthermore, the catalytic device 60 is positioned below the outward inclined portions 21a, 21a of the seat frames 20, 20, and is positioned between outer end portions 21b, 21b in the vehicle width direction, the outer end portions 21b, 21b being positioned in the vehicle width direction of the left and right outward inclined portions 21a, 21a. As depicted in Figure 1, the catalytic device 60 is arranged above a virtual line U1 extending straight, the virtual line U1 connecting the lower end of the under cover 48 being positioned in the rear portion of the under cover 48 and the lower end of the crankcase 34 of the unit swing engine 13.

The upstream exhaust pipe portion 61 includes a lateral extending portion 61a extending downward and subsequently toward the other side in the vehicle width direction in front of the catalytic device 60 from the exhaust pipe connecting portion 35e of the cylinder head 35b, and a folded-back portion 61b extending rearward from the downstream end of the lateral extending portion 61a and being subsequently folded back to one side in the vehicle width direction to form a U-shape.

The exhaust pipe connecting portion 35e is positioned on the center line C, and the lateral extending portion 61a extends toward the other side opposite to the one side in the vehicle width direction on which the muffler 37 is positioned, from the center in the vehicle width direction. More specifically, the lateral extending portion 61a extends toward the other side in the vehicle width direction and obliquely forward.

The downstream end of the folded-back portion 61b is connected to the other side end 63a (an upstream end) in the vehicle width direction of the outer cylinder 63 of the catalytic device 60. The upstream exhaust pipe portion 61 is formed to have a diameter smaller than that of the outer cylinder 63 except for a connecting portion with the outer cylinder 63. The folded-back portion 61b and the other side end 63a of the catalytic device 60 are positioned more inside in the vehicle width direction than the outward inclined portion 21a of the seat frame 20 on the other side in the vehicle width direction.

The catalytic device 60 is arranged between the upstream exhaust pipe portion 61 and the front end 34a of the crankcase 34. Also, the catalytic device 60 is arranged offset in the vehicle width direction so that a center 60b in the vehicle width direction of the catalytic device 60 is positioned on one side in the vehicle width direction relative to the center line C in the vehicle width direction of the saddled vehicle 1, or on a side on which the muffler 37 is positioned.

One side end 63b (a downstream end) in the vehicle width direction of the outer cylinder 63 of the catalytic device 60 is positioned more inside in the vehicle width direction than the outward inclined portion 21a of the seat frame 20 on the one side in the vehicle width direction.

As depicted in Figure 4, the catalytic device 60 is arranged in a region between a virtual line L1 and a virtual line L2, the virtual line L1 connecting the pivot shaft 39 for connecting the link member 38 to the engine brackets 28, 28 and the front end 34a of the crankcase 34, and the virtual line L2 connecting the pivot shaft 39 and the exhaust pipe connecting portion 35e of the cylinder head 35b to which the upstream end of the upstream exhaust pipe portion 61 of the exhaust pipe 36 is connected. Here, the virtual line L2 is arranged to pass through the front end of the exhaust pipe connecting portion 35e.

Furthermore, as viewed from another perspective, the catalytic device 60 is arranged in a position where at least part of the catalytic device 60 overlaps with the cylinder 35 in a plan view, at the front of the front end 34a of the crankcase 34.

In the first embodiment, the link member 38 is arranged above the crankcase 34, whereby a space can be secured in a region below the cylinder 35 and between the virtual line L1 and the virtual line L2, and the catalytic device 60 can be arranged in the space. Therefore, the catalytic device 60 can be arranged in a compact manner so that the catalytic device 60 does not contact the other parts around the catalytic device 60.

More specifically, since the catalytic device 60 is arranged between the exhaust pipe connecting portion 35e of the cylinder head 35b and the front end 34a of the crankcase 34, the space between the upstream exhaust pipe portion 61 and the front end 34a is effectively utilized while securing the arrangement space of the upstream exhaust pipe portion 61 extending from the exhaust pipe connecting portion 35e, so that the catalytic device 60 can be arranged in a compact manner.

The exhaust pipe 36 includes the lateral extending portion 61a and the folded-back portion 61b. The exhaust pipe 36 extends in the vehicle width direction which is opposite to the muffler 37 and is subsequently folded back to be connected to the catalytic device 60, whereby the pipe length of the upstream exhaust pipe portion 61 can be secured long, and the upstream exhaust pipe portion 61 can be extended in accordance with the required performance of the engine 30.

Furthermore, the catalytic device 60 is arranged so that the center 60b in the vehicle width direction is offset toward the muffler 37 side with respect to the center line C in the vehicle width direction of the saddled vehicle 1, whereby the pipe length of the upstream exhaust pipe portion 61 can be secured long.

The downstream exhaust pipe portion 62 includes a bending portion 62a extending toward the one side in the vehicle width direction from the one side end 63b of the catalytic device 60 and subsequently bending rearward, and a rearward extending portion 62b extending rearward from the bending portion 62a to be connected to the front end 37b of the muffler 37. The rearward extending portion 62b extends rearward through below the fan cover 57.

A second oxygen sensor 65 (an oxygen sensor, Figure 4) for detecting oxygen in the exhaust gas is attached to the downstream exhaust pipe portion 62. Thus, providing the second oxygen sensor 65 to the downstream exhaust pipe portion 62 on the downstream side of the catalytic device 60 enables detection of a concentration of oxygen in the exhaust gas after passing through the catalytic device 60.

As depicted in Figure 4, the cylinder cover 58 of the shroud 56 is arranged upward to the front along the axis 35d of the cylinder 35, and the lower surface portion of the cylinder cover 58 is inclined upward toward the catalytic device 60 from the position behind the catalytic device 60.

A clearance portion 58b recessed upward is formed in a portion in the lower surface portion of the cylinder cover 58 that faces the catalytic device 60 so as to be separated from the upper surface of the catalytic device 60. The clearance portion 58b is positioned behind the exhaust pipe through hole 58a. A distance between the catalytic device 60 and the cylinder cover 58 can be secured by the clearance portion 58b, whereby the thermal effect of the catalytic device 60 on the cylinder cover 58 can be reduced even when the catalytic device 60 is provided below the cylinder 35.

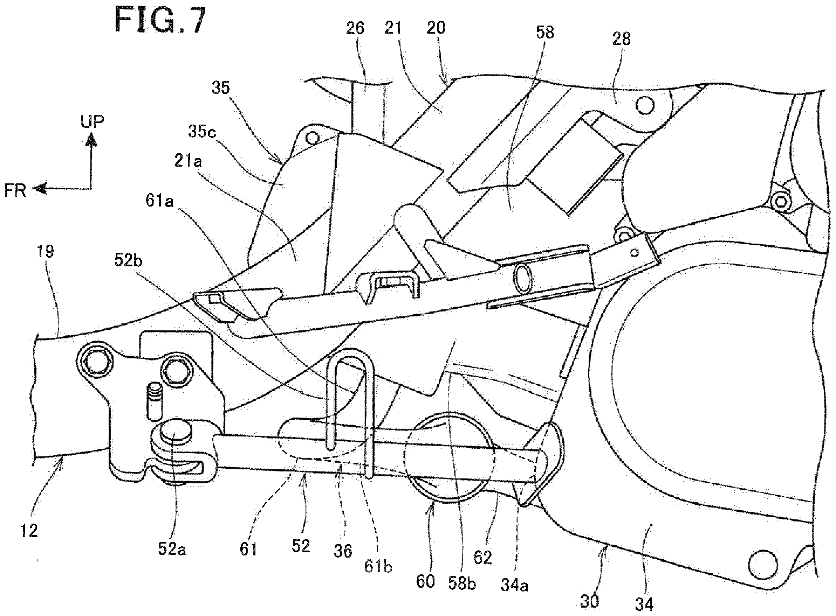

Figure 7 is a left side view of portions around the side stand 52 and the catalytic device 60.

As depicted in Figure 7, when the side stand 52 is turned around the side stand turning shaft 52a to be in the stored state, the bar-shaped side stand 52 extends in the front-rear direction, and most portions of the side stand 52 excluding the front end portion thereof overlap with the upstream exhaust pipe portion 61 and the catalytic device 60 from the outside in the vehicle width direction. Thus, the side stand 52 can protect the upstream exhaust pipe portion 61 and the catalytic device 60 from the side, and the upstream exhaust pipe portion 61 and the catalytic device 60 are hardly visible, whereby the appearance can be improved.

The side stand 52 further includes an operation portion 52b extending outward in the vehicle width direction from middle portions in the front-rear direction in the stored state. An end portion on an outer side of the operation portion 52b in the vehicle width direction is bent to extend upward. The operation portion 52b is a portion for holding the foot of a rider when the rider operates the side stand 52. In the stored state of the side stand 52, the operation portion 52b overlaps with the upstream exhaust pipe portion 61 when viewed from the outside, whereby the operation portion 52b allows the upstream exhaust pipe portion 61 to be hardly visible, and can protect the upstream exhaust pipe portion 61.

As depicted in Figure 1, the lower end 51b of the center stand 51 when the center stand 51 is in the stored state is a reference point for the minimum ground clearance of the saddled vehicle 1. The lower ends 51b are positioned on the left and right sides of the rear wheel 3, respectively, and the left or right lower end 51b is a portion first in contact with a road surface when the saddled vehicle 1 is banked to the left or right.

The catalytic device 60 is arranged above the lower end 51b of the center stand 51. Therefore, the catalytic device 60 can be arranged sufficiently high relative to the road surface even when the catalytic device 60 is arranged below the cylinder 35.

As depicted in Figure 4 to Figure 6, the cross member 23 is arranged in front of the upstream exhaust pipe portion 61 and the catalytic device 60 and above the upstream exhaust pipe portion 61 and the catalytic device 60, but a horizontal line H (Figure 4) extending rearward from the lower end of the cross member 23 overlaps with the upper portion of the catalytic device 60. The catalytic device 60 is positioned to overlap with the cross member 23 in the vehicle width direction. That is, as viewed from the front, the lower portion of the cross member 23 overlaps with the upstream exhaust pipe portion 61 and the catalytic device 60 from the front. Therefore, the cross member 23 can protect the upstream exhaust pipe portion 61 and the catalytic device 60 from the front.

A rear end portion of the step floor 11 is supported by the support frames 27, 27 from below. Each of the support frames 27, 27 supports a tandem step 8 (Figure 1) for a pillion passenger to be seated on the rear portion of the seat 10. The left and right support frames 27, 27 are positioned outside in the vehicle width direction of the catalytic device 60 in a position where the left and right support frames 27, 27 overlap with the catalytic device 60 in the front-rear direction. Therefore, any one of the support frames 27, 27 is brought into contact with the ground earlier than the catalytic device 60 even when the saddled vehicle 1 is tilted to the side, whereby the catalytic device 60 can be effectively protected.

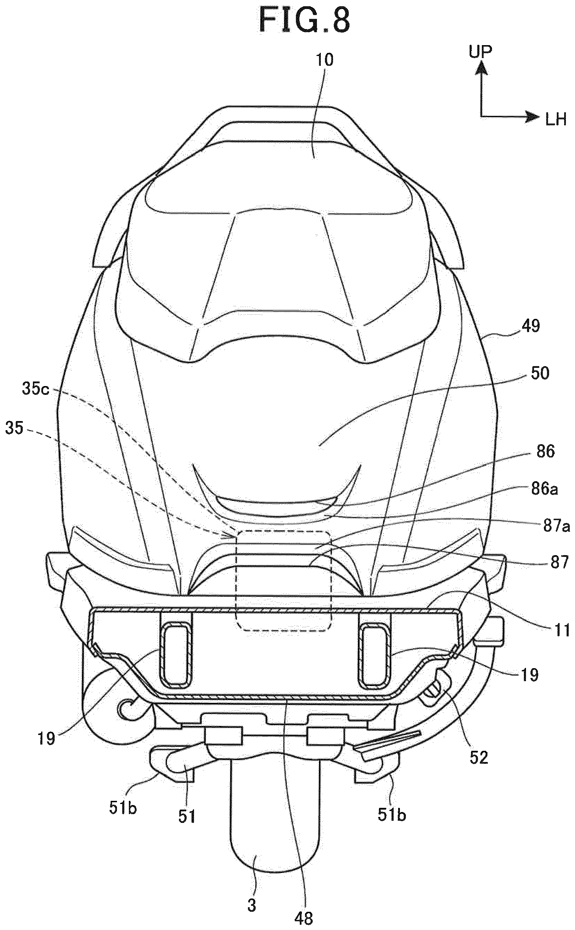

Figure 8 is a cross-sectional view taken along a line VIII-VIII in Figure 1. It is noted that Figure 8 depicts only lower frames 19, 19 in a space between the step floor 11 and the under cover 48, and does not depict the other parts in the space.

As depicted in Figure 1 and Figure 8, an upper opening 86 and a lower opening 87 (openings) through the center lower cover 50 are formed in the center lower cover 50 which is positioned below the front end of the seat 10.

The upper opening 86 is formed in a slit shape extending in the vehicle width direction, and is positioned in front of the cylinder 35 and above the cylinder 35. The upper opening 86 includes a lower wall portion 86a extending upward to the rear from a lower edge of the peripheral edge portion of the upper opening 86.

Part of traveling air of the saddled vehicle 1 is introduced from the upper opening 86 into the center lower cover 50, is guided by the lower wall portion 86a to flow upward to the rear, and then flows rearward along the upper surface of the unit swing engine 13 to be discharged to the outside. As a result, the traveling air blows off dust or the like attached on the portion around the unit swing engine 13 to the outside.

The lower opening 87 is formed in a slit shape extending in the vehicle width direction, and is positioned below the upper opening 86. As depicted in Figure 2 and Figure 8, the lower opening 87 is positioned in front of the cylinder 35 and below the upper end of the cylinder 35 which is the uppermost end of the unit swing engine 13.

The lower opening 87 includes an upper wall portion 87a extending downward to the rear from an upper edge of the peripheral edge portion of the lower opening 87. The upper wall portion 87a is inclined downward to the rear to be directed to the catalytic device 60.

Part of traveling air of the saddled vehicle 1 is introduced from the lower opening 87 into the center lower cover 50, is guided by the upper wall portion 87a to flow downward to the rear, and flows rearward along the lower surface of the unit swing engine 13 through around the catalytic device 60 to be then discharged to the outside. Therefore, the traveling air can be used to effectively cool the catalytic device 60.

As depicted in Figure 5, an air guide opening 88 for guiding the cooling air of the cooling fan 55 to the catalytic device 60 is formed in the lower surface of the cylinder cover 58 of the shroud 56. The air guide opening 88 is arranged at a position where the air guide opening 88 overlaps with the catalytic device 60 in bottom view, and is formed integrally with the exhaust pipe through hole 58a. It is noted that the air guide opening 88 may be formed as a separate hole from the exhaust pipe through hole 58a. The cooling air taken into the shroud 56 from the air intake port 57a (Figure 6) by means of the drive of the cooling fan 55 flows through the shroud 56 to cool the cylinder 35, and is discharged from the exhaust pipe through hole 58a and the air guide opening 88. The cooling air discharged from the air guide opening 88 contacts the catalytic device 60 to cool the catalytic device 60. Therefore, the cooling air of the cooling fan 55 can be used to effectively cool the catalytic device 60.

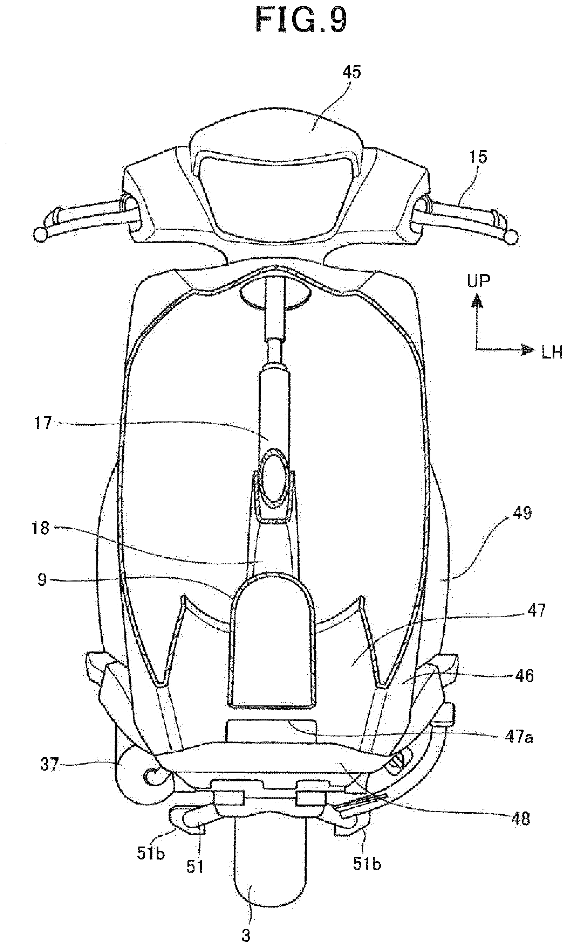

Figure 9 is a cross-sectional view taken along a line IX-IX in Figure 1.

As depicted in Figure 9, a front opening 47a through the leg shield 47 in the front-rear direction is formed in the lower end portion of the leg shield 47. The leg shield 47 covers the legs of the rider seated on the seat 10 from the front.

The front opening 47a is positioned behind the front wheel 2, and is positioned below the rear end of the front fender 9. The front opening 47a is formed to open forward the space (Figure 8) between the step floor 11 and the under cover 48. The step floor 11 extends rearward to a position where the step floor 11 overlaps with the front end of the unit swing engine 13 in side view. A rear end of the space between the step floor 11 and the under cover 48 is open to the lower surface side of the cylinder 35.

Part of traveling air of the saddled vehicle 1 flows into the front opening 47a into the space between the step floor 11 and the under cover 48, flows rearward through this space, and contacts the catalytic device 60 below the cylinder 35. Therefore, the traveling air flowing through the front opening 47a can be used to effectively cool the catalytic device 60.

As described above, according to the first embodiment to which the present invention is applied, the saddled vehicle 1 includes the vehicle body frame 12, the unit swing engine 13 having the cylinder 35 arranged generally horizontally, and the crankcase 34, the unit swing engine 13 being swingably supported on the vehicle body frame 12 via the link member 38, the exhaust pipe 36 connected to the unit swing engine 13, and the catalytic device 60 arranged in an intermediate portion of the exhaust pipe 36. The link member 38 is arranged above the unit swing engine 13, and the catalytic device 60 is arranged below the cylinder 35, and is positioned in a region between a virtual line L1 and a virtual line L2 in side view, the virtual line L1 connecting the pivot shaft 39 for connecting the link member 38 to the vehicle body frame 12 and the front end 34a of the crankcase 34, and the virtual line L2 connecting the pivot shaft 39 and the exhaust pipe connecting portion 35e of the unit swing engine 13 to which the end of the exhaust pipe 36 is connected. Thus, the link member 38 is arranged above the unit swing engine 13, whereby a space can be secured in a region below the unit swing engine 13, and the catalytic device 60 can be arranged using this space. Furthermore, since the catalytic device 60 is positioned in a region between the virtual line L1 connecting the pivot shaft 39 and the front end 34a of the crankcase 34 and the virtual line L2 connecting the exhaust pipe connecting portion 35e and the pivot shaft 39, the catalytic device 60 can be arranged in a compact manner so that the catalytic device 60 does not contact the other parts around the catalytic device 60.

The vehicle body frame 12 includes the outward inclined portions 21a, 21a inclining outward so that a distance in the vehicle width direction therebetween is increased in the rearward direction, and the catalytic device 60 is arranged inside in the vehicle width direction of the outer end portions 21b, 21b in the vehicle width direction of the outward inclined portions 21a, 21a in bottom view, whereby the catalytic device 60 can be protected by the outward inclined portions 21a, 21a from the outside in the vehicle width direction. The heavy catalytic device 60 can be arranged on the center side in the vehicle width direction, whereby the vehicle mass can be concentrated in the vehicle width direction.

The center stand 51 for supporting the saddled vehicle 1 in an upright state is provided, and the catalytic device 60 is arranged above the lower ends 51b of the center stand 51, whereby the catalytic device 60 can be arranged below the cylinder 35 and above the lower ends 51b of the center stand 51, and can be arranged high relative to the road surface.

Furthermore, when the side stand 52 is attached to the vehicle body frame 12 and the side stand 52 is in the stored state, the side stand 52 overlaps with at least part of the catalytic device 60 in side view. Thus, the side stand 52 can protect the catalytic device 60 from the side, and the catalytic device 60 is hardly visible, whereby the appearance can be improved.

The air-cooling shroud 56 is attached to the unit swing engine 13, the cylinder cover 58 of the shroud 56 is inclined upward toward the catalytic device 60 from the position behind the catalytic device 60, and the clearance portion 58b is provided in a portion that faces the catalytic device 60. Thus, the distance between the catalytic device 60 and the shroud 56 can be secured by the clearance portion 58b of the shroud 56, whereby the thermal effect of the catalytic device 60 on the shroud 56 can be reduced.

The cooling fan 55 is attached to the crankshaft 33 housed in the crankcase 34, and the shroud 56 includes the air guide opening 88 for guiding the cooling air of the cooling fan 55 to the catalytic device 60. Thus, the cooling air of the cooling fan 55 can be introduced from the air guide opening 88 to the catalytic device 60, whereby the catalytic device 60 can be cooled.

The seat 10 for a rider is arranged above the unit swing engine 13, the center lower cover 50 is arranged below the front end of the seat 10, the center lower cover 50 includes the lower opening 87 which is positioned below the uppermost end of the unit swing engine 13, and the lower opening 87 is inclined obliquely downward to be directed to the catalytic device 60. Thus, the traveling air can be introduced from the lower opening 87 of the center lower cover 50 to the catalytic device 60, whereby the traveling air can be used to cool the catalytic device 60.

The step floor 11 is arranged in front of the unit swing engine 13, the leg shield 47 is arranged in front of the step floor 11, and the leg shield 47 includes the front opening 47a for introducing the air to the catalytic device 60. Thus, the traveling air can be introduced from the front opening 47a of the leg shield 47 to the catalytic device 60, whereby the traveling air can be used to cool the catalytic device 60.

The catalytic device 60 is arranged so that the lengthwise direction thereof is directed in the vehicle width direction, and the vehicle body frame 12 includes the pair of left and right lower frames 19, 19, and is provided with the cross member 23 connecting the lower frames 19, 19 in the vehicle width direction, so that the cross member 23 overlaps with at least part of the catalytic device 60 in front view. Thus, the catalytic device 60 can be protected by the cross member 23 from the front.

Furthermore, the catalytic device 60 is arranged so that the lengthwise direction thereof is directed in the vehicle width direction, the center 60b in the vehicle width direction of the catalytic device 60 is offset toward the one side in the vehicle width direction with respect to the center line C in the vehicle width direction of the saddled vehicle 1, whereby the pipe length of the upstream exhaust pipe portion 61 provided upstream of the catalytic device 60 can be secured long.

The muffler 37 to which the rear end of the exhaust pipe 36 is connected is provided on the one side in the vehicle width direction, the exhaust pipe connecting portion 35e is provided in the lower surface of the cylinder 35, and the catalytic device 60 is arranged behind the exhaust pipe connecting portion 35e and in front of the front end 34a of the crankcase 34 so that the lengthwise direction of the catalytic device 60 is directed in the vehicle width direction. The exhaust pipe 36 includes the upstream exhaust pipe portion 61 extending downward and subsequently toward the other side in the vehicle width direction in front of the catalytic device 60 from the exhaust pipe connecting portion 35e, and subsequently folded back to the one side in the vehicle width direction to be connected to the other side end in the vehicle width direction of the catalytic device 60, and the downstream exhaust pipe portion 62 extending rearward from the one side end in the vehicle width direction of the catalytic device 60 to be connected to the muffler 37. Thus, the upstream exhaust pipe portion 61 extending from the lower surface of the cylinder 35 extends toward a side opposite to the muffler 37 side and is then folded back to be connected to the other end of the catalytic device 60, whereby the length of the upstream exhaust pipe portion 61 can be maintained large. Furthermore, the space between the upstream exhaust pipe portion 61 and the front end 34a of the crankcase 34 can be used to arrange the catalytic device 60 in a compact manner.

### [Second Embodiment]

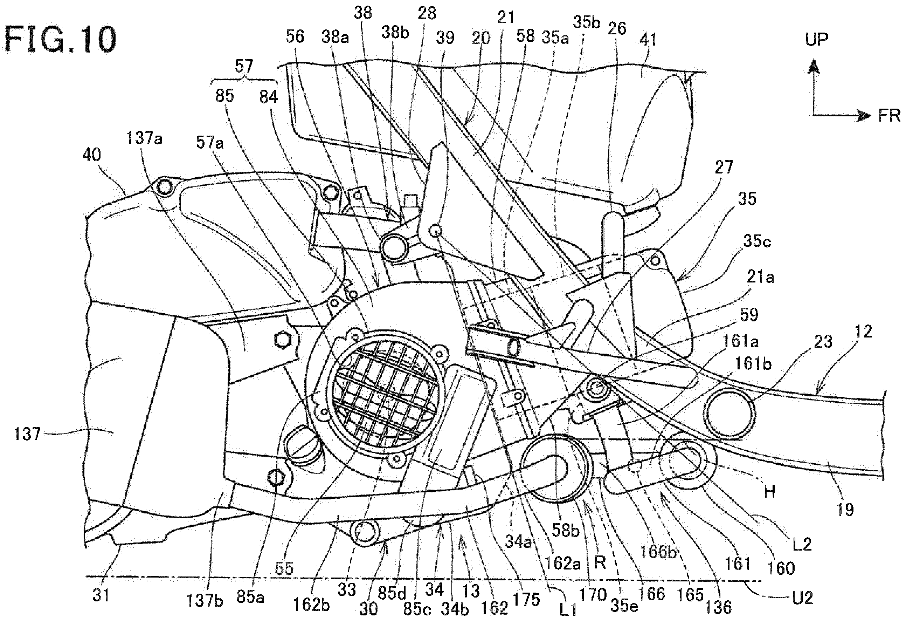

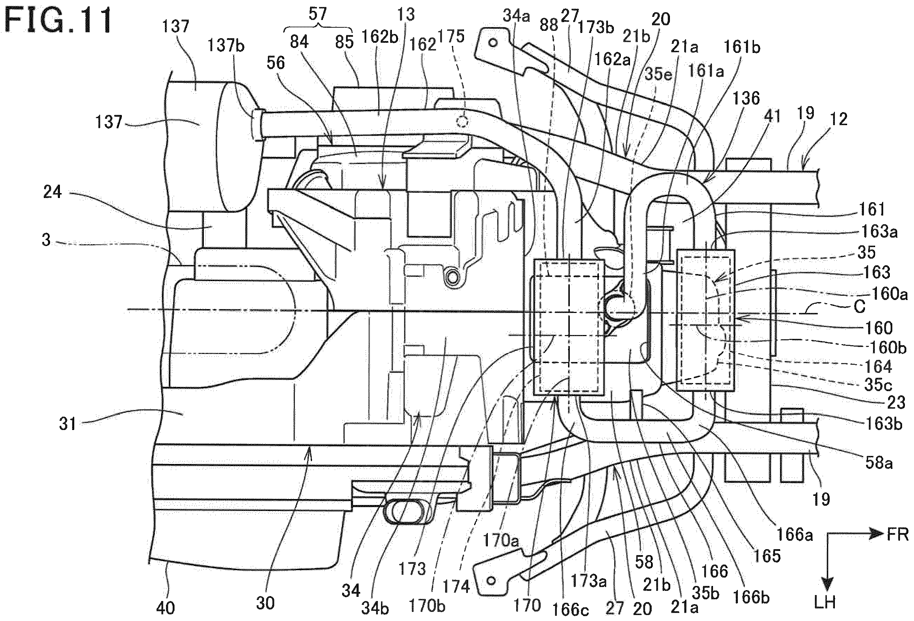

Hereinafter, a second embodiment to which the present invention is applied will be described with reference to Figure 10 and Figure 11. In the second embodiment, portions configured to be the same as those in the above-described first embodiment will be denoted by the same reference signs, and descriptions thereof will be omitted.

The second embodiment is different from the first embodiment in that a first catalytic device 160 and a second catalytic device 170 are provided instead of the catalytic device 60 of the above-described first embodiment.

Figure 10 is a right side view depicting a structure of a portion around a unit swing engine 13 in the second embodiment. Figure 11 is a plan view of the portion around the unit swing engine 13 as viewed from below.

An exhaust pipe 136 is connected to the engine 30, and a muffler 137 is connected to a downstream end of the exhaust pipe 136. An arrangement position and a fixing method of the muffler 137 are the same as those of the muffler 37 of the above-described first embodiment.

The exhaust pipe 136 includes an upstream exhaust pipe 161 connected to the exhaust pipe connecting portion 35e of the cylinder head 35b, the first catalytic device 160 provided downstream of the upstream exhaust pipe 161, a middle exhaust pipe 166 provided downstream of the first catalytic device 160, the second catalytic device 170 provided downstream of the middle exhaust pipe 166, and a downstream exhaust pipe 162 provided downstream of the second catalytic device 170. That is, in the second embodiment, the catalytic device includes the first catalytic device 160 and the second catalytic device 170.

The first catalytic device 160 includes an outer cylinder 163 formed in a cylindrical shape that is oblong in the vehicle width direction, and a catalyst carrier 164 housed inside the outer cylinder 163.

The second catalytic device 170 includes an outer cylinder 173 formed in a cylindrical shape that is oblong in the vehicle width direction, and a catalyst carrier 174 housed inside the outer cylinder 173.

The catalyst carriers 164, 174 each have a honeycomb porous structure having a large number of pores in the same manner as the catalyst carrier 64.

The first catalytic device 160 and the second catalytic device 170 are arranged to be lined up in the front-rear direction in a space R which is positioned in front of the front end 34a of the crankcase 34 and below the cylinder 35. The first catalytic device 160 and the second catalytic device 170 are arranged, in the space R, so that the respective axes 160a, 170a are directed in the vehicle width direction, that is, so that the respective axes 160a, 170a are arranged in a direction perpendicular to the center line C in the vehicle width direction, and generally horizontally, in bottom view.

More specifically, the first catalytic device 160 is arranged in front of the exhaust pipe connecting portion 35e of the cylinder head 35b and below the front end portion of the cylinder 35 or below the head cover 35c.

The second catalytic device 170 is arranged behind the exhaust pipe connecting portion 35e of the cylinder head 35b and in front of the front end 34a of the crankcase 34. The second catalytic device 170 overlaps with the air guide opening 88 in bottom view, and faces the clearance portion 58b.

The first catalytic device 160 and the second catalytic device 170 each are positioned above the lower surface of the front end portion of the oil pan part 34b and below the lower surface of the cylinder 35. In addition, the first catalytic device 160 and the second catalytic device 170 each are positioned below the outward inclined portions 21a, 21a of the seat frames 20, 20, and are positioned between the left and right outward inclined portions 21a, 21a in the vehicle width direction.

Figure 10 depicts a horizontal virtual line U2 passing through the lower end 51b (Figure 1) of the center stand 51. The first catalytic device 160 and the second catalytic device 170 each are positioned above the virtual line U2, and are positioned above the lower end 51b (Figure 1) of the center stand 51. Furthermore, the first catalytic device 160 and the second catalytic device 170 each are positioned above the virtual line U1 (Figure 1).

Although not depicted in Figure 10, the side stand 52 (Figure 7) overlaps with the first catalytic device 160 and the second catalytic device 170 from the outside in the vehicle width direction, in side view.

The upstream exhaust pipe 161 includes a lateral extending portion 161a extending downward and subsequently toward the one side in the vehicle width direction in front of the second catalytic device 170 from the exhaust pipe connecting portion 35e of the cylinder head 35b, and a folded-back portion 161b extending forward from the downstream end of the lateral extending portion 161a and being subsequently folded back to the other side in the vehicle width direction to form in a U-shape.

The exhaust pipe connecting portion 35e is positioned on the center line C, and the lateral extending portion 161a extends toward the one side in the vehicle width direction on which the muffler 137 is positioned, from the center in the vehicle width direction. The downstream end of the folded-back portion 161b is connected to one side end 163a (an upstream end) in the vehicle width direction of the outer cylinder 163 of the first catalytic device 160. The upstream exhaust pipe 161 is formed to have a diameter smaller than that of the first catalytic device 160. The folded-back portion 161b and the one side end 163a of the first catalytic device 160 each are positioned more inside in the vehicle width direction than the outward inclined portion 21a of the seat frame 20 on the one side in the vehicle width direction.

The first catalytic device 160 is arranged between the lateral extending portion 161a of the upstream exhaust pipe 161 and the cross member 23. The other side end 163b (a downstream end) in the vehicle width direction of the first catalytic device 160 is positioned more inside in the vehicle width direction than the outward inclined portion 21a of the seat frame 20 on the other side in the vehicle width direction.

The middle exhaust pipe 166 is a pipe connecting the first catalytic device 160 and the second catalytic device 170. The middle exhaust pipe 166 includes a front bending portion 166a extending toward the other side in the vehicle width direction from the other side end 163b of the first catalytic device 160 and being subsequently bent rearward, a rearward extending portion 166b extending rearward from the front bending portion 166a, and a rear bending portion 166c being bent toward the one side in the vehicle width direction at the rear end of the rearward extending portion 166b to be connected to the second catalytic device 170 to form in a U-shape.

It is noted that a bypass pipe (not depicted) connecting the upstream exhaust pipe 161 and the middle exhaust pipe 166 may be provided so that part of exhaust gas flowing through the upstream exhaust pipe 161 flows from the bypass pipe to the middle exhaust pipe 166.

A second oxygen sensor 165 being positioned downstream of the first oxygen sensor 59 is attached to the rearward extending portion 166b of the middle exhaust pipe 166. The second oxygen sensor 165 is formed in a bar shape, and is inserted from the outside of the middle exhaust pipe 166 so that an oxygen detecting portion at a distal end of the second oxygen sensor 165 is positioned in the middle exhaust pipe 166. Thus, providing the second oxygen sensor 165 enables detection of a concentration of oxygen in the exhaust gas after passing through the first catalytic device 160.

The second oxygen sensor 165 is attached to an inner side surface in the vehicle width direction of the rearward extending portion 166b, and protrudes inward in the vehicle width direction from the inner side surface. That is, the second oxygen sensor 165 is arranged to overlap with the rearward extending portion 166b at the position inside in the vehicle width direction of the rearward extending portion 166b, in side view.

The second oxygen sensor 165 is positioned between the rearward extending portion 166b and the upstream exhaust pipe 161 and in a space between the first catalytic device 160 and the second catalytic device 170. Thus, the second oxygen sensor 165 is positioned inside in the vehicle width direction of the rearward extending portion 166b, and the second oxygen sensor 165 is hidden by the rearward extending portion 166b, the upstream exhaust pipe 161 and the like thereby being hardly visible, whereby the appearance can be improved.

The second catalytic device 170 is arranged between the lateral extending portion 161a of the upstream exhaust pipe 161 and the front end 34a of the crankcase 34.

The downstream end of the middle exhaust pipe 166 is connected to the other side end 173a in the vehicle width direction of the second catalytic device 170.

The first catalytic device 160 and the second catalytic device 170 are arranged offset in the vehicle width direction so that the respective centers 160b, 170b in the vehicle width direction are positioned on the other side in the vehicle width direction or on the opposite side to the side where the muffler 137 is positioned, relative to the center line C in the vehicle width direction of the saddled vehicle 1. The first catalytic device 160 is arranged offset in the vehicle width direction to the opposite side to the muffler 137 side, whereby the pipe length of the upstream exhaust pipe 161 extending to the muffler 137 side from the exhaust pipe connecting portion 35e can be secured long.

The downstream exhaust pipe 162 includes an extending portion 162a extending to the one side in the vehicle width direction from one side end 173b in the vehicle width direction in the second catalytic device 170, and a rearward extending portion 162b being bent at an end of the extending portion 162a and subsequently extending rearward to be connected to a front end 137b of the muffler 137. The rearward extending portion 162b extends rearward below the fan cover 57.

A third oxygen sensor 175 is attached to a front end portion of the rearward extending portion 162b of the downstream exhaust pipe 162. Thus, providing the third oxygen sensor 175 enables detection of a concentration of oxygen in the exhaust gas after passing through the second catalytic device 170.

As depicted in Figure 10, the first catalytic device 160 and the second catalytic device 170 are arranged in the region between the virtual line L1 and the virtual line L2 below the cylinder 35.

Furthermore, as viewed from another perspective, the first catalytic device 160 and the second catalytic device 170 are arranged in a position where the first catalytic device 160 and the second catalytic device 170 overlap with the cylinder 35 in a plan view, at the front of the front end 34a of the crankcase 34.

In the second embodiment, the link member 38 is arranged above the crankcase 34, whereby a space can be secured in a region below the cylinder 35 and between the virtual line L1 and the virtual line L2, and the first catalytic device 160 and the second catalytic device 170 can be arranged in the space. Therefore, the first catalytic device 160 and the second catalytic device 170 can be arranged in a compact manner so as not to contact the other parts around the first catalytic device 160 and the second catalytic device 170.

Moreover, since the first catalytic device 160 and the second catalytic device 170 are arranged to be lined up in front of and behind the exhaust pipe connecting portion 35e of the cylinder head 35b, the space in front of and behind the lateral extending portion 161a is effectively utilized while securing the arrangement space of the lateral extending portion 161a of the upstream exhaust pipe 161 extending from the exhaust pipe connecting portion 35e, so that the first catalytic device 160 and the second catalytic device 170 can be arranged in a compact manner.

Furthermore, the upstream exhaust pipe 161, the first catalytic device 160, the middle exhaust pipe 166, and the second catalytic device 170 are positioned between the outward inclined portions 21a, 21a of the seat frames 20, 20. Therefore, the upstream exhaust pipe 161, the first catalytic device 160, the middle exhaust pipe 166, and the second catalytic device 170 can be protected from the side by the outward inclined portions 21a, 21a.

The catalytic device includes the first catalytic device 160 and the second catalytic device 170 being positioned downstream of the first catalytic device 160, the second oxygen sensor 165 is arranged in the middle exhaust pipe 166 connecting between the first catalytic device 160 and the second catalytic device 170 in the exhaust pipe 136, and the second oxygen sensor 165 is arranged at a position where the second oxygen sensor 165 overlaps with the middle exhaust pipe 166 in side view. Thus, the second oxygen sensor 165 can detect the oxygen in the middle exhaust pipe 166 being positioned downstream of the first catalytic device 160, the middle exhaust pipe 166 can cover and protect the second oxygen sensor 165, and the middle exhaust pipe 166 prevents the second oxygen sensor 165 from being visible, whereby the appearance can be improved.

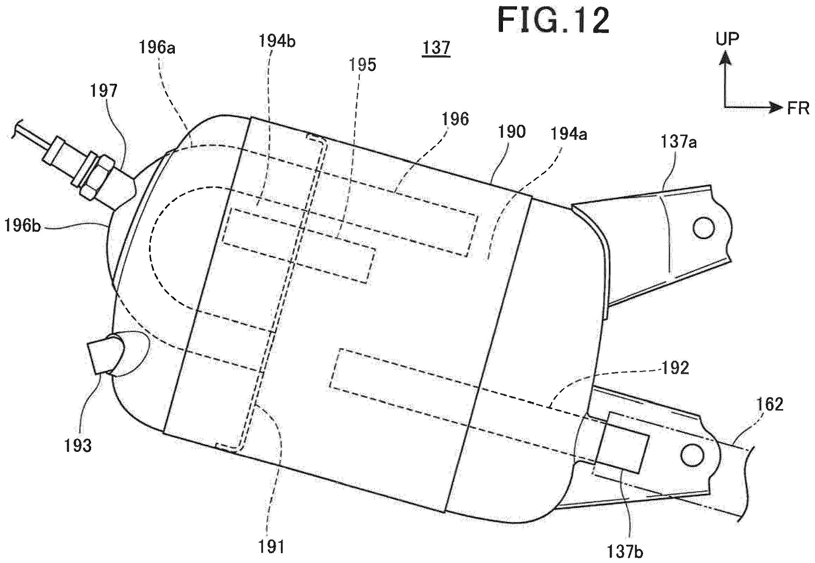

Figure 12 is a right side view of the muffler 137.

The muffler 137 includes a case 190 in which an expansion chamber is formed, a partition wall 191 partitioning the interior of the case 190 into two in the front-rear direction, an inlet pipe 192 to which a rear end of the downstream exhaust pipe 162 is connected, and an outlet pipe 193 being provided at a rear end. The interior of the muffler 137 is partitioned by the partition wall 191 into a first expansion chamber 194a being positioned on the front side and a second expansion chamber 194b being positioned on the rear side of the partition wall 191.

The muffler 137 further includes a communication pipe 195 penetrating through the partition wall 191 and communicating between the first expansion chamber 194a and the second expansion chamber 194b, a return pipe 196 entering the second expansion chamber 194b through the partition wall 191 from the first expansion chamber 194a, and being subsequently folded back in a U-shape in the second expansion chamber 194b to be returned to the first expansion chamber 194a through the partition wall 191 from the second expansion chamber 194b, and a fourth oxygen sensor 197. The muffler 137 is fixed to the rear portion of the crankcase 34 via the front stay 137a.

A front end of the inlet pipe 192 is the above-described front end 137b. The exhaust gas in the downstream exhaust pipe 162 flows into the first expansion chamber 194a from the inlet pipe 192 and expands in the first expansion chamber 194a. Part of the exhaust gas in the first expansion chamber 194a flows into the second expansion chamber 194b through the communication pipe 195, and is discharged from the outlet pipe 193. Another part of the exhaust gas in the first expansion chamber 194a flows to the fourth oxygen sensor 197 through the return pipe 196, and is returned to the first expansion chamber 194a.

A U-shaped bending portion 196a at the rear end of the return pipe 196 includes an exposed portion 196b being exposed to the outside of the muffler 137 from a rear surface opening 190a being formed in a rear surface of the case 190.

The fourth oxygen sensor 197 is inserted into the exposed portion 196b and fixed to the exposed portion 196b. The fourth oxygen sensor 197 can detect a concentration of oxygen in the exhaust gas in the first expansion chamber 194a of the muffler 137.

### [Third Example]

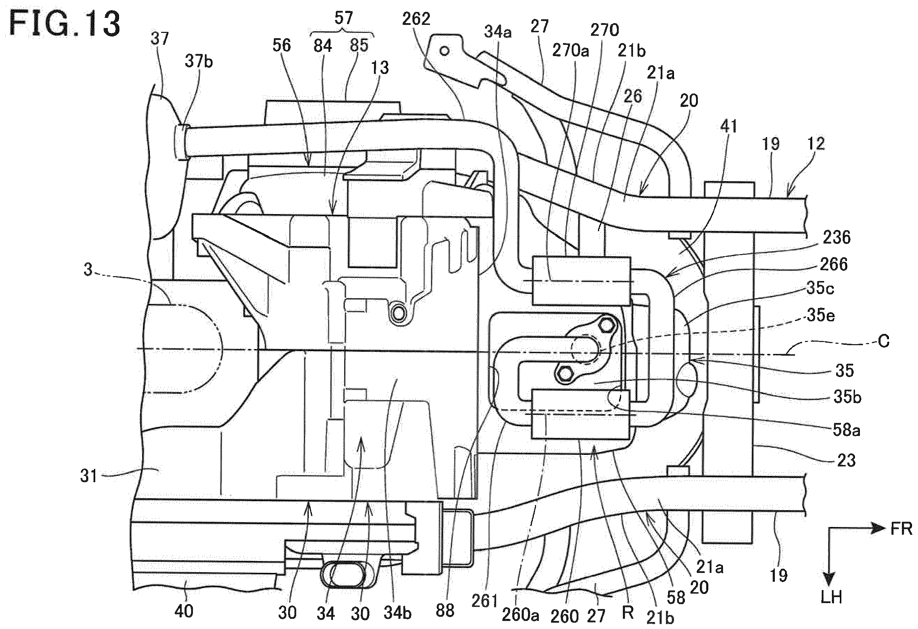

Hereinafter, a third example will be described with reference to Figure 13. In the third example, portions configured to be the same as those in the above-described first embodiment will be denoted by the same reference signs, and descriptions thereof will be omitted.

The third example is different from the first embodiment in that, for example, a first catalytic device 260 and a second catalytic device 270 are provided instead of the catalytic device 60 of the above-described first embodiment, and the first catalytic device 260 and the second catalytic device 270 are arranged so that the respective axes 260a, 270a are directed in the front-rear direction.

Figure 13 is a plan view of a portion around a unit swing engine 13 in the third example, as viewed from below.

An exhaust pipe 236 is connected to the engine 30, and a muffler 37 is connected to a downstream end of the exhaust pipe 236.

The exhaust pipe 236 includes an upstream exhaust pipe 261 being connected to the exhaust pipe connecting portion 35e of the cylinder head 35b, the first catalytic device 260 being provided downstream of the upstream exhaust pipe 261, a middle exhaust pipe 266 being provided downstream of the first catalytic device 260, the second catalytic device 270 provided downstream of the middle exhaust pipe 266, and a downstream exhaust pipe 262 being provided downstream of the second catalytic device 270.

The first catalytic device 260 and the second catalytic device 270 are arranged to be lined up in the vehicle width direction (a left-right direction) in a space R being positioned in front of the front end 34a of the crankcase 34 and below the cylinder 35. The first catalytic device 260 and the second catalytic device 270 are arranged, in the space R, so that the respective axes 260a, 270a are directed in the front-rear direction, that is, so that the respective axes 260a, 270a are arranged in a direction generally parallel to the center line C in the vehicle width direction, or generally horizontally, in bottom view.

More specifically, the first catalytic device 260 is arranged on the other side in the vehicle width direction and below the cylinder 35, relative to the exhaust pipe connecting portion 35e of the cylinder head 35b.

The second catalytic device 270 is arranged on the one side in the vehicle width direction and below the cylinder 35, relative to the exhaust pipe connecting portion 35e of the cylinder head 35b.

The first catalytic device 260 and the second catalytic device 270 each are positioned above the lower surface of the front end portion of the oil pan part 34b and below the lower surface of the cylinder 35. Furthermore, the first catalytic device 260 and the second catalytic device 270 each are positioned below the outward inclined portions 21a, 21a of the seat frames 20, 20, and are positioned between the left and right outward inclined portions 21a, 21a in the vehicle width direction. The first catalytic device 260 and the second catalytic device 270 are also positioned above the virtual line U1 (Figure 1).

The upstream exhaust pipe 261 extends downward to the rear from the exhaust pipe connecting portion 35e of the cylinder head 35b, and is subsequently bent forward to be connected to the upstream end (rear end) of the first catalytic device 260.

The middle exhaust pipe 266 extends toward the one side in the vehicle width direction from the downstream end (front end) of the first catalytic device 260 to be connected to the upstream end (front end) of the second catalytic device 270.

The downstream exhaust pipe 262 extends outward in the vehicle width direction from the downstream end (rear end) of the second catalytic device 270, and is subsequently bent and extends rearward so that the rear end of the downstream exhaust pipe 262 is connected to the front end 37b of the muffler 37.

The first catalytic device 260 and the second catalytic device 270 are arranged in a position where the first catalytic device 260 and the second catalytic device 270 overlap with the cylinder 35 in a plan view, at the front of the front end 34a of the crankcase 34, and the first catalytic device 260 and the second catalytic device 270 each are positioned behind the front end of the cylinder 35.

That is, although not depicted in Figure 13, when comparing Figure 13 with Figure 4, it is clear that the first catalytic device 260 and the second catalytic device 270 are arranged below the cylinder 35 and a region between the virtual line L1 and the virtual line L2.

In the third example, the link member 38 is arranged above the crankcase 34, whereby a space can be secured in a region below the cylinder 35 and between the virtual line L1 and the virtual line L2, and the first catalytic device 260 and the second catalytic device 270 can be arranged in the space. Therefore, the first catalytic device 260 and the second catalytic device 270 can be arranged in a compact manner.

Although not depicted in Figure 13, the first catalytic device 260 and the second catalytic device 270 each are positioned above the lower end 51b (Figure 1) of the center stand 51.

Furthermore, although not depicted in Figure 13, the side stand 52 (Figure 7) overlaps with the first catalytic device 260 and the second catalytic device 270 from the outside in the vehicle width direction, in side view.

### [Fourth Embodiment]

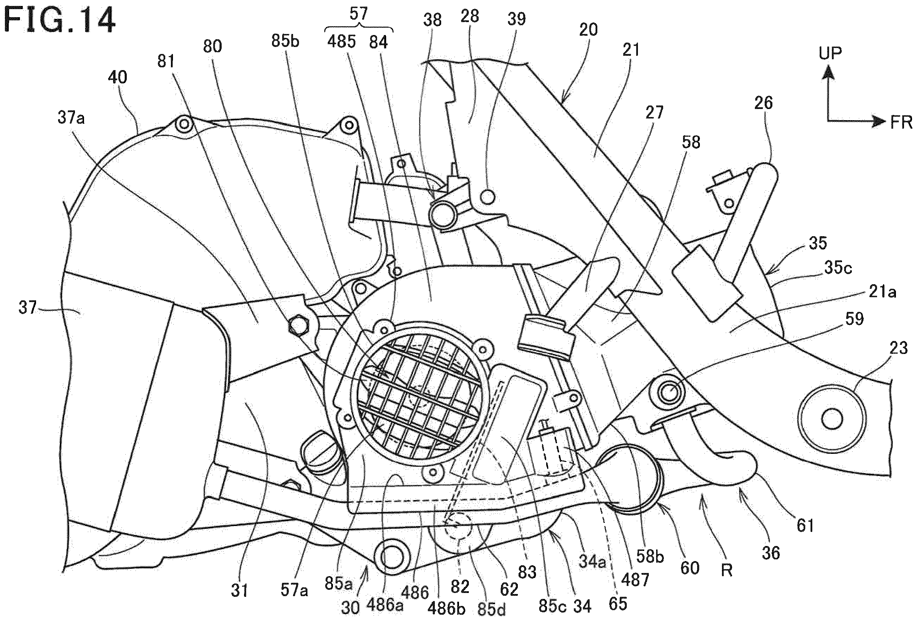

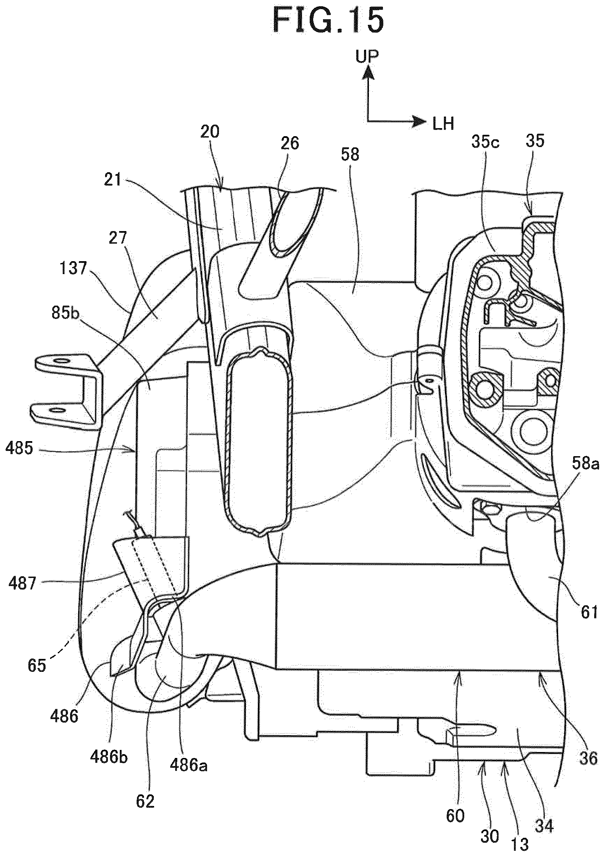

Hereinafter, a fourth embodiment to which the present invention is applied will be described with reference to Figure 14 and Figure 15. In the fourth embodiment, portions configured to be the same as those in the above-described first embodiment will be denoted by the same reference signs, and descriptions thereof will be omitted.

The fourth embodiment is different from the first embodiment in that, for example, a sensor cover portion 487 covering the second oxygen sensor 65 is provided to a fan cover 457.

Figure 14 is a right side view depicting a structure of a portion around a unit swing engine 13 in a fourth embodiment. Figure 15 is a front view of a portion around the second oxygen sensor 65 as viewed from the front side. It is noted that in the fourth embodiment, the muffler 137 of the second embodiment is used as a muffler.

The fan cover 457 includes a cover main body portion 84, and a louver cover 485 covering a movable louver 81 and a cooling fan 55 from the outside.

The louver cover 485 is provided integrally with a base portion 85a, a cylindrical portion 85b, a link cover portion 85c, an actuator cover portion 85d, an exhaust pipe cover portion 486 covering the downstream exhaust pipe portion 62, and a sensor cover portion 487 covering the second oxygen sensor 65.

The exhaust pipe cover portion 486 includes an upper wall portion 486a extending outward from a lower edge of the base portion 85a, and a side wall portion 486b extending downward from an outer edge of the upper wall portion 486a. The upper wall portion 486a covers the downstream exhaust pipe portion 62 from above. The side wall portion 486b covers the downstream exhaust pipe portion 62 from the outside.

The sensor cover portion 487 is provided at a front end portion of the exhaust pipe cover portion 486 being positioned in front of the link cover portion 85c. The sensor cover portion 487 extends upward from the upper wall portion 486a. The sensor cover portion 487 is formed in a cylindrical shape so as to be opened in the up-down direction and the inside direction, and covers the second oxygen sensor 65 from the front, outside, and rear.

The sensor cover portion 487 is inclined outward in the vehicle width direction along the second oxygen sensor 65 being inclined more outward in the vehicle width direction than vertically, in front view.

Thus, the fan cover 457 includes the sensor cover portion 487 covering the second oxygen sensor 65 from the side, whereby the second oxygen sensor 65 can be protected with a simple structure using the fan cover 457.

### [Fifth Embodiment]

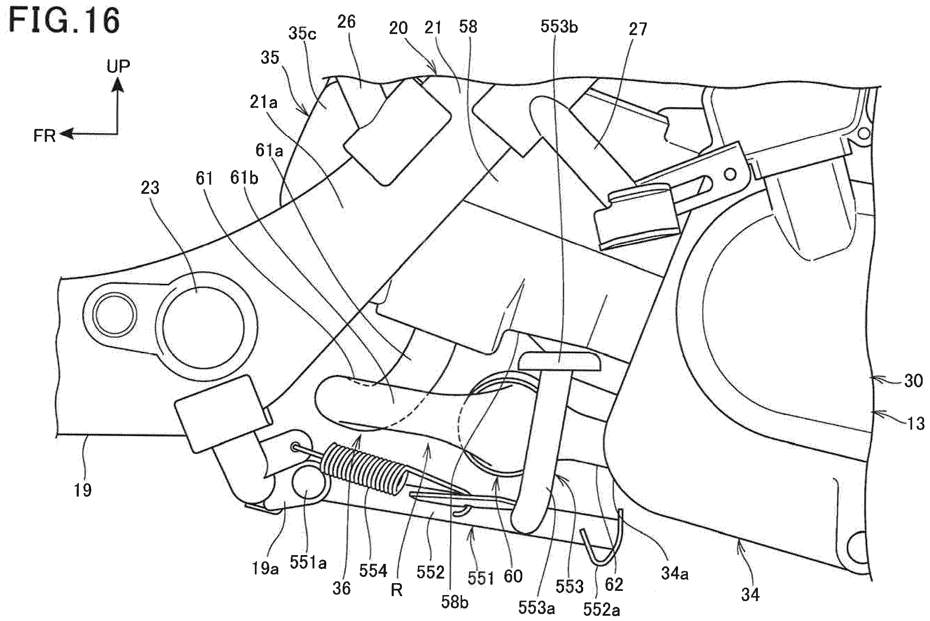

Hereinafter, a fifth embodiment to which the present invention is applied will be described with reference to Figure 16. In the fifth embodiment, portions configured to be the same as those in the above-described first embodiment will be denoted by the same reference signs, and descriptions thereof will be omitted.

The fifth embodiment is different from the first embodiment in that, for example, a center stand 551 being provided instead of the center stand 51 covers the catalytic device 60.

Figure 16 is a left side view of portions around the center stand 551 and the catalytic device 60 in the fifth embodiment.

A stand stay 19a extending downward is provided at each of rear ends of the lower frames 19, 19.

The center stand 551 is attached to the stand stays 19a via a center stand turning shaft 551a extending in the vehicle width direction, and the center stand 551 is configured to be turned about the center stand turning shaft 551a so that the center stand 551 is in the stored state or in the parking state.

The center stand 551 includes the center stand turning shaft 551a being positioned at a front end of the center stand 551 in the stored state of Figure 16, a pair of left and right leg portions 552, 552 (a right leg portion is not depicted) each extending rearward from the center stand turning shaft 551a, an operation portion 553 extending outward from the leg portion 552 on the other side (left side) in the vehicle width direction, and a spring 554 biasing the center stand 551 in the stored state and the parking state.

When the center stand 551 is turned downward to extend in the up-down direction (the parking state), each of lower ends 552a, 552a of the left and right leg portions 552, 552 is brought into contact with the ground, so that the saddled vehicle 1 is parked in the upright state.

The lower ends 552a, 552a being in a state in which the center stand 551 is in the stored state are regarded as reference points for the minimum ground clearance of the saddled vehicle 1. The lower ends 552a, 552a are positioned on the left and right sides relative to the rear wheel 3, respectively, and the left or right lower end 552a is a portion first in contact with a road surface when the saddled vehicle 1 is banked to the left or right.

The catalytic device 60 is arranged above the lower ends 552a, 552a of the center stand 551 being in the stored state. Therefore, the catalytic device 60 can be arranged sufficiently high relative to the road surface even when the catalytic device 60 is arranged below the cylinder 35.

The operation portion 553 is a portion being trod on by a rider's foot to change a state of the center stand 551 from the stored state to the parking state. The operation portion 553 includes a bar-shaped extending portion 553a extending outward in the vehicle width direction from an outside surface of the rear portion of the left-side leg portion 552 in the stored state, and is subsequently bent and extends upward, and a foot step portion 553b being provided on the upper end of the extending portion 553a. The rider operates the center stand 551 by treading on the foot step portion 553b.

In the stored state of the center stand 551, the leg portions 552, 552 of the center stand 551 each extend rearward below the upstream exhaust pipe portion 61 and the catalytic device 60, and the lower ends 552a, 552a each are positioned below the front end 34a of the crankcase 34. Thus, the leg portions 552, 552 cover the upstream exhaust pipe portion 61 and the catalytic device 60 from below, whereby the upstream exhaust pipe portion 61 and the catalytic device 60 can be protected.

In the stored state of the center stand 551, the operation portion 553 of the center stand 551 overlaps with the folded-back portion 61b of the upstream exhaust pipe portion 61 and the catalytic device 60 from the outside in the vehicle width direction, in side view. Thus, the folded-back portion 61b and the catalytic device 60 can be hidden by being covered by the operation portion 553, whereby the appearance can be improved, and the folded-back portion 61b and the catalytic device 60 can be protected.

It is noted that while the saddled vehicle 1 being a motorcycle has been described as an example of a saddled vehicle to which the present invention is applied, in the above first to fifth embodiments, this is not restrictive of the present invention. The present invention is also applicable to three-wheeled saddled vehicles having two front wheels or rear wheels, saddled vehicles having four or more wheels and the like.

### Reference Signs List

- 1: Saddled vehicle
- 10: Seat
- 11: Step floor
- 12: Vehicle body frame
- 13: Unit swing engine
- 19, 19: Lower frames (frames)
- 21a, 21a: Outward inclined portions
- 21b, 21b: Outer end portions in the vehicle width direction
- 23: Cross member
- 33: Crankshaft
- 34: Crankcase
- 34a: Front end
- 35: Cylinder
- 35e: Exhaust pipe connecting portion
- 36, 136, 236: Exhaust pipe
- 37: Muffler
- 38: Link member
- 39: Pivot shaft (connecting portion)
- 47: Leg shield
- 47a: Front opening
- 50: Center lower cover
- 51, 551: Center stand
- 51b, 552a: Lower end
- 52: Side stand
- 55: Cooling fan
- 56: Shroud
- 57: Fan cover
- 58b: Clearance portion
- 60: Catalytic device
- 60b: Center
- 61: Upstream exhaust pipe portion
- 62: Downstream exhaust pipe portion
- 65: Second oxygen sensor (oxygen sensor)
- 87: Lower opening (opening)
- 88: Air guide opening
- 160: First catalytic device (catalytic device)
- 165: Second oxygen sensor (oxygen sensor)
- 166: Middle exhaust pipe
- 170: Second catalytic device (catalytic device)
- 260: First catalytic device (catalytic device)
- 270: Second catalytic device (catalytic device)
- 487: Sensor cover portion
- C: Center line (center in the vehicle width direction of a vehicle)
- L1: Virtual line
- L2: Virtual line

## Claims

1. An exhaust structure for a saddled vehicle, comprising:
a vehicle body frame (12);
a unit swing engine (13) having a cylinder (35) arranged generally horizontally, and a crankcase (34), the unit swing engine (13) being swingably supported on the vehicle body frame (12) via a link member (38);
an exhaust pipe (36, 136) connected to the unit swing engine (13); and
a catalytic device (60, 160, 170) arranged in an intermediate portion of the exhaust pipe (36, 136);
wherein the exhaust pipe (36, 136) includes an upstream exhaust pipe portion (61, 161) which is drawn out from a cylinder head (35b) of the cylinder (35), the catalytic device (60, 160, 170) which is provided downstream of the upstream exhaust pipe portion (61, 161) in the flow of exhaust gas, and a downstream exhaust pipe portion (62) provided downstream of the catalytic device (60, 160, 170);
the exhaust structure for a saddled vehicle being **characterised in that**:
the link member (38) is arranged above the crankcase (34) ;
at least part of the catalytic device (60, 160, 170) is arranged below the cylinder (35) and is positioned in a region between a virtual line L1 and a virtual line L2 in side view, the virtual line L1 connecting a connecting portion (39) for connecting the link member (38) to the vehicle body frame (12) and a front end (34a) of the crankcase (34), the virtual line L2 connecting the connecting portion (39) and an exhaust pipe connecting portion (35e), of the cylinder head (35b), to which an upstream end of the upstream exhaust pipe portion (61, 161) is connected;
the catalytic device (60, 160, 170) is arranged so that a lengthwise direction thereof is directed in the vehicle width direction, so that an axis (60a, 160a, 170a)of the catalytic device (60, 160, 170) is directed in a direction perpendicular to a center line (C) in the vehicle width direction, and
a center (60b) in the vehicle width direction of the catalytic device (60, 160, 170) is offset toward one side in the vehicle width direction with respect to the center line (C) in the vehicle width direction of the vehicle.

2. The exhaust structure for a saddled vehicle according to claim 1, wherein
the vehicle body frame (12) includes outward inclined portions (21a), the outward inclined portions (21a) inclining outward so that a distance in a vehicle width direction therebetween is increased in a rearward direction in bottom view, and the catalytic device (60, 160, 170) is arranged more inside in the vehicle width direction than outer end portions (21b) in the vehicle width direction of the outward inclined portions (21a).

3. The exhaust structure for a saddled vehicle according to claim 1 or 2, wherein
a center stand (51, 551) for supporting the saddled vehicle in an upright state is provided, and
the catalytic device (60, 160, 170) is arranged above a lower end (51b, 552a) of the center stand (51, 551) .

4. The exhaust structure for a saddled vehicle according to any one of claims 1 to 3, wherein
a side stand (52) is attached to the vehicle body frame (12), and
in a state in which the side stand (52) is stored, the side stand (52) overlaps with at least part of the catalytic device (60, 160, 170) in side view.

5. The exhaust structure for a saddled vehicle according to any one of claims 1 to 4, wherein
an air-cooling shroud (56) is attached to the unit swing engine (13), the shroud (56) is inclined upward toward the catalytic device (60, 170) from a position behind the catalytic device (60, 170), and a clearance portion (58b) is provided in a portion that faces the catalytic device (60, 170).

6. The exhaust structure for a saddled vehicle according to claim 5, wherein
a cooling fan (55) is attached to a crankshaft (33) housed in the crankcase (34), and
the shroud (56) includes an air guide opening (88) for guiding cooling air of the cooling fan (55) to the catalytic device (60, 170).

7. The exhaust structure for a saddled vehicle according to any one of claims 1 to 6, wherein
an oxygen sensor (65) is attached to the exhaust pipe,
the cooling fan (55) is attached to the crankshaft (33) housed in the crankcase (34), a fan cover (57) covering the cooling fan (55) being provided, and
the fan cover (57) includes a sensor cover portion (487) covering the oxygen sensor (65) from a side.

8. The exhaust structure for a saddled vehicle according to any one of claims 1 to 7, wherein
a seat (10) for a rider is arranged above the unit swing engine (13), a center lower cover (50) is arranged below a front end of the seat (10), and
the center lower cover (50) includes an opening (87) which is positioned below an uppermost end of the unit swing engine (13) so that the opening (87) is inclined downward to a rear to be directed to the catalytic device (60) .

9. The exhaust structure for a saddled vehicle according to any one of claims 1 to 8, wherein
a step floor (11) is arranged in front of the unit swing engine (13), a leg shield (47) is arranged in front of the step floor (11), and the leg shield (47) includes a front opening (47a) for introducing air to the catalytic device (60).

10. The exhaust structure for a saddled vehicle according to any one of claims 1 to 9, wherein
the catalytic device (60, 160, 170) is arranged so that a lengthwise direction thereof is directed in the vehicle width direction, the vehicle body frame (12) includes a pair of left and right frames (19), and is provided with a cross member (23) connecting the frames (19) in the vehicle width direction, and
the cross member (23) overlaps with at least part of the catalytic device (60, 160, 170) in front view.

11. The exhaust structure for a saddled vehicle according to any one of claims 1 to 10, wherein
the catalytic device (160, 170) includes a first catalytic device (160), and a second catalytic device (170) positioned downstream of the first catalytic device (160),
an oxygen sensor (165) is arranged in a middle exhaust pipe (166) connecting between the first catalytic device (160) and the second catalytic device (170) in the exhaust pipe (136) and
the oxygen sensor (165) is arranged in a position where the oxygen sensor (165) overlaps with the middle exhaust pipe (166) in side view.

12. The exhaust structure for a saddled vehicle according to claim 1, wherein
a muffler (37) to which a rear end of the exhaust pipe (36) is connected is provided on one side in the vehicle width direction,
the exhaust pipe connecting portion (35e) is provided in a lower surface of the cylinder (35),
the catalytic device (60) is arranged behind the exhaust pipe connecting portion (35e) and in front of the front end (34a) of the crankcase (34) so that a lengthwise direction of the catalytic device (60) is directed in the vehicle width direction, and
the exhaust pipe (36) includes the upstream exhaust pipe portion (61) extending downward and subsequently toward another side in the vehicle width direction in front of the catalytic device (60) from the exhaust pipe connecting portion (35e), and subsequently folded back to one side in the vehicle width direction to be connected to another side end in the vehicle width direction of the catalytic device (60), and the downstream exhaust pipe portion (62) extending rearward from one side end in the vehicle width direction of the catalytic device (60) to be connected to the muffler (37).

## Patentansprüche

1. Auspuffstruktur für ein Sattelfahrzeug, umfassend:
einen Fahrzeugkarosserierahmen (12);
einen schwenkbaren Motor (13), der einen im Allgemeinen horizontal eingerichteten Zylinder (35) aufweist, und ein Kurbelgehäuse (34), wobei der schwenkbare Motor (13) über ein Verbindungselement (38) schwenkbar auf dem Fahrzeugkarosserierahmen (12) gestützt wird;
ein Auspuffrohr (36, 136), das mit dem schwenkbaren Motor (13) verbunden ist; und
eine Katalysatorvorrichtung (60, 160, 170), die in einem Zwischenabschnitt des Auspuffrohrs (36, 136) eingerichtet ist;
wobei das Auspuffrohr (36, 136) einen stromaufwärtigen Auspuffrohrabschnitt (61, 161) einschließt, der aus einem Zylinderkopf (35b) des Zylinders (35) herausgezogen ist, wobei die Katalysatorvorrichtung (60, 160, 170), die stromabwärts des stromaufwärtigen Auspuffrohrabschnitts (61, 161) im Strom des Auspuffgases bereitgestellt ist, und ein stromabwärtiger Auspuffrohrabschnitt (62) stromabwärts der Katalysatorvorrichtung (60, 160, 170) bereitgestellt sind;
wobei die Auspuffstruktur für ein Sattelfahrzeug **dadurch gekennzeichnet ist, dass**:
das Verbindungselement (38) oberhalb des Kurbelgehäuses (34) eingerichtet ist;
zumindest ein Teil der Katalysatorvorrichtung (60, 160, 170) unterhalb des Zylinders (35) eingerichtet ist und in einem Bereich zwischen einer virtuellen Linie L1 und einer virtuellen Linie L2 in einer Seitenansicht positioniert ist, wobei die virtuelle Linie L1 einen Verbindungsabschnitt (39) zum Verbinden des Verbindungselements (38) mit dem Fahrzeugkarosserierahmen (12) und ein Vorderende (34e) des Kurbelgehäuses (34) verbindet, wobei die virtuelle Linie L2 den Verbindungsabschnitt (39) und einen Auspuffrohrverbindungsabschnitt (35e) des Zylinderkopfs (35b), mit dem ein stromaufwärtiges Ende des stromaufwärtigen Auspuffrohrabschnitts (61, 161) verbunden ist, verbindet;
wobei die Katalysatorvorrichtung (60, 160, 170) so eingerichtet ist, dass eine Längsrichtung davon in die Fahrzeugbreitenrichtung gerichtet ist, sodass eine Achse (60a, 160a, 170a) der Katalysatorvorrichtung (60, 160, 170) in einer Richtung senkrecht zu einer Mittellinie (C) in die Fahrzeugbreitenrichtung gerichtet ist, und
eine Mitte (60b) in der Fahrzeugbreitenrichtung der Katalysatorvorrichtung (60, 160, 170) zu einer Seite in der Fahrzeugbreitenrichtung in Bezug auf die Mittellinie (C) in der Fahrzeugbreitenrichtung des Fahrzeugs versetzt ist.

2. Auspuffstruktur für ein Sattelfahrzeug nach Anspruch 1, wobei
der Fahrzeugkarosserierahmen (12) nach außen geneigte Abschnitte (21a) einschließt, wobei die nach außen geneigten Abschnitte (21a) sich so nach außen neigen, dass ein Abstand in einer Fahrzeugbreitenrichtung dazwischen in einer rückwärtigen Richtung in einer Sicht von unten zunimmt und die Katalysatorvorrichtung (60, 160, 170) mehr nach innen in der Fahrzeugbreitenrichtung eingerichtet ist als äußere Endabschnitte (21b) in der Fahrzeugbreitenrichtung der nach außen geneigten Abschnitte (21a).

3. Auspuffstruktur für ein Sattelfahrzeug nach Anspruch 1 oder 2, wobei
einen mittigen Ständer (51, 551) zum Stützen des Sattelfahrzeugs in einem aufrechten Zustand bereitgestellt ist, und
die Katalysatorvorrichtung (60, 160, 170) oberhalb eines unteren Endes (51b, 552a) des mittigen Ständers (51, 551) eingerichtet ist

4. Auspuffstruktur für ein Sattelfahrzeug nach einem der Ansprüche 1 bis 3, wobei
ein Seitenständer (52) an dem Fahrzeugkarosserierahmen (12) befestigt ist, und
in einem Zustand, in dem der Seitenständer (52) verstaut ist, der Seitenständer (52) sich zumindest mit einem Teil der Katalysatorvorrichtung (60, 160, 170) in einer Seitenansicht überlappt.

5. Auspuffstruktur für ein Sattelfahrzeug nach einem der Ansprüche 1 bis 4, wobei
ein Luftkühlungsummantelung (56) an dem schwenkbaren Motor (13) befestigt ist, wobei die Ummantelung (56) von einer Position hinter der Katalysatorvorrichtung (60, 170) nach oben zu der Katalysatorvorrichtung (60, 170) hin geneigt ist und ein Spaltabschnitt (58b) in einem Abschnitt bereitstellt ist, der der Katalysatorvorrichtung (60, 170) zugewandt ist.

6. Auspuffstruktur für ein Sattelfahrzeug nach Anspruch 5, wobei
ein Kühlgebläse (55) an der im Kurbelgehäuse (34) untergebrachten Kurbelwelle (33) befestigt ist, und
die Ummantelung (56) eine Luftführungsöffnung (88) zum Führen von Kühlluft des Kühlgebläses (55) zu der Katalysatorvorrichtung (60, 170) einschließt.

7. Auspuffstruktur für ein Sattelfahrzeug nach einem der Ansprüche 1 bis 6, wobei
ein Sauerstoffsensor (65) an dem Auspuffrohr befestigt ist,
das Kühlgebläse (55) an der im Kurbelgehäuse (34) untergebrachten Kurbelwelle (33) befestigt ist, eine Gebläseabdeckung (57), die das Kühlgebläse (55) abdeckt, bereitgestellt ist, und
die Gebläseabdeckung (57) einen Sensorabdeckungsabschnitt (487) einschließt, der den Sauerstoffsensor (65) von einer Seite abdeckt.

8. Auspuffstruktur für ein Sattelfahrzeug nach einem der Ansprüche 1 bis 7, wobei
ein Sitz (10) für einen Fahrer oberhalb des schwenkbaren Motors (13) eingerichtet ist, eine mittige untere Abdeckung (50) unterhalb eines Vorderendes des Sitzes (10) eingerichtet ist, und
die mittige untere Abdeckung (50) eine Öffnung (87) einschließt, die unterhalb eines untersten Ende des schwenkbaren Motors (13) positioniert ist, sodass die Öffnung (87) nach unten zu einer Rückseite geneigt ist, um zu der Katalysatorvorrichtung (60) gerichtet zu sein

9. Auspuffstruktur für ein Sattelfahrzeug nach einem der Ansprüche 1 bis 8, wobei
ein Trittboden (11) vor dem schwenkbaren Motor (13) eingerichtet ist, ein Beinschutz (47) vor dem Trittboden (11) eingerichtet ist und der Beinschutz (47) eine vordere Öffnung (47a) zum Einführen von Luft zu der Katalysatorvorrichtung (60) einschließt.

10. Auspuffstruktur für ein Sattelfahrzeug nach einem der Ansprüche 1 bis 9, wobei
die Katalysatorvorrichtung (60, 160, 170) so eingerichtet ist, dass eine Längsrichtung davon in die Fahrzeugbreitenrichtung gerichtet ist, wobei der Fahrzeugkarosserierahmen (12) ein Paar von linken und rechten Rahmen (19) einschließt und mit einem Kreuzelement (23) bereitgestellt ist, das die Rahmen (19) in der Fahrzeugbreitenrichtung verbindet, und
das Kreuzelement (23) sich zumindest mit einem Teil der Katalysatorvorrichtung (60, 160, 170) in einer Vorderansicht überlappt.

11. Auspuffstruktur für ein Sattelfahrzeug nach einem der Ansprüche 1 bis 10, wobei
die Katalysatorvorrichtung (160, 170) eine erste Katalysatorvorrichtung (160) und eine stromabwärts der ersten Katalysatorvorrichtung (160) positionierte, zweite Katalysatorvorrichtung (170) einschließt,
der Sauerstoffsensor (165) in einem mittleren Auspuffrohr (166) eingerichtet ist, das zwischen der ersten Katalysatorvorrichtung (160) und der zweiten Katalysatorvorrichtung (170) im Auspuffrohr (136) verbindet, und
der Sauerstoffsensor (165) in einer Position eingerichtet ist, wo sich der Sauerstoffsensor (165) in einer Seitenansicht mit dem mittleren Auspuffrohr (166) überlappt.

12. Auspuffstruktur für ein Sattelfahrzeug nach Anspruch 1, wobei
einen Auspuffdämpfer (37), mit dem ein rückwärtiges Ende des Auspuffrohrs (36) verbunden ist, an einer Seite in der Fahrzeugbreitenrichtung bereitgestellt ist,
der Auspuffrohrverbindungsabschnitt (35e) in einer unteren Oberfläche des Zylinders (35) bereitgestellt ist,
die Katalysatorvorrichtung (60) so hinter dem Auspuffrohrverbindungsabschnitt (35e) und vor dem Vorderende (34e) des Kurbelgehäuses (34) eingerichtet ist, dass eine Längsrichtung der Katalysatorvorrichtung (60) in die Fahrzeugbreitenrichtung gerichtet ist, und
das Auspuffrohr (36) den stromaufwärtigen Auspuffrohrabschnitt (61) einschließt, der sich vom Auspuffrohrverbindungsabschnitt (35e) nach unten und anschließend zu einer anderen Seite in der Fahrzeugbreitenrichtung vor der Katalysatorvorrichtung (60) erstreckt und anschließend zurück zu einer Seite in der Fahrzeugbreitenrichtung gefaltet ist, um mit einem anderen Seitenende in der Fahrzeugbreitenrichtung der Katalysatorvorrichtung (60) verbunden zu werden, und den stromabwärtigen Auspuffrohrabschnitt (62), der sich rückwärtig von einem Seitenende in der Fahrzeugbreitenrichtung der Katalysatorvorrichtung (60) erstreckt, um mit dem Auspuffdämpfer (37) verbunden zu werden.

## Revendications

1. Structure d'échappement pour un véhicule à selle, comprenant :
un châssis de carrosserie de véhicule (12) ;
un moteur oscillant (13) présentant cylindre (35) agencé généralement horizontalement, et une boîte de manivelle (34), le moteur oscillant (13) étant supporté de manière oscillante sur le châssis de carrosserie de véhicule (12) par l'intermédiaire d'un élément de liaison (38) ;
un tuyau d'échappement (36, 136) raccordé au moteur oscillant (13) ; et
un dispositif catalytique (60, 160, 170) agencé dans une partie intermédiaire du tuyau d'échappement (36, 136) ;
dans laquelle le tuyau d'échappement (36, 136) inclut une partie de tuyau d'échappement amont (61, 161) qui s'étend depuis une culasse de cylindre (35b) du cylindre (35), le dispositif catalytique (60, 160, 170) qui est fourni en aval de la partie de tuyau d'échappement amont (61, 161) dans le flux de gaz d'échappement, et une partie de tuyau d'échappement aval (62) fournie en aval du dispositif catalytique (60, 160, 170) ;
la structure d'échappement pour un véhicule à selle étant **caractérisée en ce que** :
l'élément de liaison (38) est agencé au-dessus de la boîte de manivelle (34) ;
au moins une partie du dispositif catalytique (60, 160, 170) est agencée au-dessous du cylindre (35) et est positionnée dans une région comprise entre une ligne virtuelle L1 et une ligne virtuelle L2 en vue latérale, la ligne virtuelle L1 raccordant une partie de raccordement (39) destinée à raccorder l'élément de liaison (38) au châssis de carrosserie de véhicule (12) et une extrémité avant (34a) de la boîte de manivelle (34), la ligne virtuelle L2 raccordant la partie de raccordement (39) et une partie de raccordement de tuyau d'échappement (35e), de la culasse de cylindre (35b), à laquelle une extrémité amont de la partie de tuyau d'échappement amont (61, 161) est raccordée ;
le dispositif catalytique (60, 160, 170) est agencé de sorte qu'un sens de la longueur de celui-ci soit dirigé dans le sens de la largeur de véhicule, de sorte qu'un axe (60a, 160a, 170a) du dispositif catalytique (60, 160, 170) soit dirigé dans une direction perpendiculaire à une ligne centrale (C) dans le sens de la largeur de véhicule, et
un centre (60b) dans le sens de la largeur de véhicule du dispositif catalytique (60, 160, 170) est décalé d'un côté dans le sens de la largeur de véhicule par rapport à la ligne centrale (C) dans le sens de la largeur de véhicule du véhicule.

2. Structure d'échappement pour un véhicule à selle selon la revendication 1, dans laquelle
le châssis de carrosserie de véhicule (12) inclut des parties inclinées vers l'extérieur (21a), les parties inclinées vers l'extérieur (21a) s'inclinant vers l'extérieur de sorte qu'une distance dans un sens de la largeur de véhicule entre celles-ci soit accrue dans une direction arrière dans une vue de dessous, et le dispositif catalytique (60, 160, 170) est agencé davantage à l'intérieur dans le sens de la largeur de véhicule que des parties d'extrémité externes (21b) dans le sens de la largeur de véhicule des parties inclinées vers l'extérieur (21a).

3. Structure d'échappement pour un véhicule à selle selon la revendication 1 ou 2, dans laquelle
une béquille centrale (51, 551) pour supporter le véhicule à selle dans un état vertical est fournie, et
le dispositif catalytique (60, 160, 170) est agencée au-dessus d'une extrémité inférieure (51b, 552a) de la béquille centrale (51, 551).

4. Structure d'échappement pour un véhicule à selle selon l'une quelconque des revendications 1 à 3, dans laquelle
une béquille latérale (52) est fixée au châssis de carrosserie de véhicule (12), et
dans un état dans lequel la béquille latérale (52) est rangée, la béquille latérale (52) empiète sur au moins une partie du dispositif catalytique (60, 160, 170) en vue latérale.

5. Structure d'échappement pour un véhicule à selle selon l'une quelconque des revendications 1 à 4, dans laquelle
un carénage de refroidissement à air (56) est fixé au moteur oscillant (13), le carénage (56) est incliné vers le haut vers le dispositif catalytique (60, 170) depuis une position derrière le dispositif catalytique (60, 170), et une partie de dégagement (58b) est fournie dans une partie qui est orientée vers le dispositif catalytique (60, 170).

6. Structure d'échappement pour un véhicule à selle selon la revendication 5, dans laquelle
un ventilateur de refroidissement (55) est fixé à un arbre-manivelle (33) logé dans la boîte de manivelle (34), et
le carénage (56) inclut une ouverture guide d'air (88) pour guider l'air de refroidissement du ventilateur de refroidissement (55) vers le dispositif catalytique (60, 170).

7. Structure d'échappement pour un véhicule à selle selon l'une quelconque des revendications 1 à 6, dans laquelle
un capteur d'oxygène (65) est fixé au tuyau d'échappement,
le ventilateur de refroidissement (55) est fixé à l'arbre-manivelle (33) logé dans la boîte de manivelle (34), un couvercle de ventilateur (57) recouvrant le ventilateur de refroidissement (55) étant fourni, et
le couvercle de ventilateur (57) inclut une partie de couvercle de capteur (487) recouvrant le capteur d'oxygène (65) d'un côté.

8. Structure d'échappement pour un véhicule à selle selon l'une quelconque des revendications 1 à 7, dans laquelle
un siège (10) pour un pilote est agencé au-dessus du moteur oscillant (13), un couvercle inférieur central (50) est agencé au-dessous d'une extrémité avant du siège (10), et
le couvercle inférieur central (50) inclut une ouverture (87) qui est positionnée au-dessous de l'extrémité la plus haute du moteur oscillant (13) de sorte que l'ouverture (87) soit inclinée vers le bas vers l'arrière pour être dirigée vers le dispositif catalytique (60).

9. Structure d'échappement pour un véhicule à selle selon l'une quelconque des revendications 1 à 8, dans laquelle
un plancher marchepied (11) est agencé devant le moteur oscillant (13), un protège-jambe (47) est agencé devant le plancher marchepied (11), et le protège-jambe (47) inclut une ouverture avant (47a) destinée à l'introduction de l'air vers le dispositif catalytique (60).

10. Structure d'échappement pour un véhicule à selle selon l'une quelconque des revendications 1 à 9, dans laquelle
le dispositif catalytique (60, 160, 170) est agencé de sorte qu'un sens de la longueur de celui-ci soit dirigé dans le sens de la largeur de véhicule, le châssis de carrosserie de véhicule (12) inclut une paire de châssis gauche et droit (19), et est doté d'un élément transversal (23) raccordant les châssis (19) dans le sens de la largeur de véhicule, et
l'élément transversal (23) empiète sur au moins une partie du dispositif catalytique (60, 160, 170) en vue de face.

11. Structure d'échappement pour un véhicule à selle selon l'une quelconque des revendications 1 à 10, dans laquelle
le dispositif catalytique (160, 170) inclut un premier dispositif catalytique (160), et un second dispositif catalytique (170) positionné en aval du premier dispositif catalytique (160),
un capteur d'oxygène (165) est agencé dans un tuyau d'échappement intermédiaire (166) raccordant le premier dispositif catalytique (160) et le second dispositif catalytique (170) dans le tuyau d'échappement (136) et
le capteur d'oxygène (165) est agencé dans une position dans laquelle le capteur d'oxygène (165) empiète sur le tuyau d'échappement intermédiaire (166) en vue latérale.

12. Structure d'échappement pour un véhicule à selle selon la revendication 1, dans laquelle
un silencieux (37) auquel une extrémité arrière du tuyau d'échappement (36) est raccordée est fourni d'un côté dans le sens de la largeur de véhicule,
la partie de raccordement de tuyau d'échappement (35e) est fournie dans une surface inférieure du cylindre (35),
le dispositif catalytique (60) est agencé derrière la partie de raccordement de tuyau d'échappement (35e) et devant l'extrémité avant (34a) de la boîte de manivelle (34) de sorte qu'un sens de la longueur du dispositif catalytique (60) soit dirigé dans le sens de la largeur de véhicule, et
le tuyau d'échappement (36) inclut la partie de tuyau d'échappement amont (61) s'étendant vers le bas puis vers un autre côté dans le sens de la largeur de véhicule devant le dispositif catalytique (60) depuis la partie de raccordement de tuyau d'échappement (35e), puis repliée vers un côté dans le sens de la largeur de véhicule pour être raccordée à une autre extrémité latérale dans le sens de la largeur de véhicule du dispositif catalytique (60), et la partie de tuyau d'échappement aval (62) s'étendant vers l'arrière depuis une extrémité latérale dans le sens de la largeur de véhicule du dispositif catalytique (60) pour être raccordée au silencieux (37).
